(19)

Europäisches
Patentamt
European
Patent Office
Office européen
des brevets

(11) **EP 4 389 778 A1**

(12) **EUROPEAN PATENT APPLICATION**

(43) Date of publication:
**26.06.2024 Bulletin 2024/26**

(21) Application number: **23215925.1**

(22) Date of filing: **12.12.2023**

(51) International Patent Classification (IPC):
**C08F 2/22** *(2006.01)*     **C08F 220/18** *(2006.01)*
**C09J 133/08** *(2006.01)*

(52) Cooperative Patent Classification (CPC):
(C-Sets available)
**C08F 220/1808; C08F 2/22; C08F 220/1802;**
**C08F 220/1804; C09J 133/08**     (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **21.12.2022 EP 22215290**

(71) Applicant: **BASF SE**
**67056 Ludwigshafen am Rhein (DE)**

(72) Inventors:
- **Langhanki, Jens Gerald**
  **67056 Ludwigshafen am Rhein (DE)**
- **Dimmer, Joerg-Alexander**
  **67056 Ludwigshafen am Rhein (DE)**
- **Ruellmann, Maximilian**
  **67056 Ludwigshafen am Rhein (DE)**

(74) Representative: **BASF IP Association**
**BASF SE**
**GBI-C006**
**67056 Ludwigshafen (DE)**

(54) **AQUEOUS POLYMER DISPERSION FOR COATING COMPOSITIONS**

(57)     The present invention relates to an aqueous polymer latex of a film-forming copolymer obtainable by aqueous emulsion polymerisation of ethylenically unsaturated monomers M comprising alkyl (meth)acrylates, comprising 2-octyl acrylate, 2-ethyl hexyl acrylate and isobutyl acrylate as main monomers, monoethylenically unsaturated carbonitrile, monomers having at least one acid group, in specific amounts and further monomers. The polymers are suitable as binders in coating compositions, in particular as polymer adhesives or binders, respectively, especially in aqueous flooring adhesive compositions, which require a reduced thickener amount.

EP 4 389 778 A1

(52) Cooperative Patent Classification (CPC): (Cont.)

C-Sets
**C08F 220/1802, C08F 220/1808, C08F 220/44,
C08F 220/06;
C08F 220/1804, C08F 220/1808, C08F 220/44,
C08F 220/06;
C08F 220/1808, C08F 220/1802, C08F 220/44,
C08F 220/1804, C08F 220/06**

**Description**

The present invention relates to an aqueous polymer latex of a film-forming copolymer obtainable by aqueous emulsion polymerisation of ethylenically unsaturated monomers M comprising alkyl (meth)acrylates, comprising 2-octyl acrylate, 2-ethyl hexyl acrylate and isobutyl acrylate as main monomers, monoethylenically unsaturated carbonitrile, monomers having at least one acid group, in specific amounts and further monomers. The polymers are suitable as binders in coating compositions, in particular as polymer adhesives or binders, respectively, especially in aqueous flooring adhesive compositions, which require a reduced thickener amount.

Aqueous polymer dispersions of polymerized ethylenically unsaturated monomers, also referred to as polymer latex, are fluid systems comprising dispersed polymer particles of a chain growth addition polymer in the aqueous dispersing medium. Depending on their polymer architecture, they can be used across a plethora of technical applications, including waterborne coating formulations for interior and exterior application and as polymer adhesive component in aqueous adhesive formulations.

Fundamental requirements of adhesives, in particular flooring adhesives, are effective adhesion of the adhesive to the substrates and effective cohesion in the layer of adhesive. Optimizing these properties at one and the same time presents problems, since in general an improvement in the adhesive properties is accompanied by a reduction in the cohesive properties of an adhesive, and vice versa.

With flooring adhesives there are further requirements to be met. Since floor coverings are usually glued over large areas, flooring adhesives require good adhesive properties in the wet and dry states. This means that the adhesive must exhibit sufficient tack both in the first minutes after laying of the adhesive and after a prolonged venting time. These two properties, referred to as wet tack and dry tack, also termed wet grab and dry grip, are difficult to combine. An improvement in one property has so far typically entailed a deterioration in the other. Furthermore, emissions ought to be kept as low as possible, this being achievable by avoiding the use of any solvents, including high-boiling solvents, in the formulation or using them in the lowest possible amount. It is apparent that it is difficult to achieve all these requirements at the same time.

Aqueous polymer dispersions wherein the polymers are made of polymerized ethylenically unsaturated monomers M comprising alkyl (meth)acrylates as main monomers, and the use thereof as polymer adhesives/binders in aqueous flooring adhesive compositions have been known for a long time, e.g. from WO 95/21884, WO 98/56867, WO 99/37716 and WO 2007/141198.

WO2022/008661 discloses flooring adhesives with a high pH-value comprising styrene acrylate copolymers.

However, the adhesive properties of these polymer dispersions are not all satisfactory.

Dispersions are frequently used to formulate various end products for different exterior and interior applications. Very often a sufficient viscosity is needed to avoid spattering or sagging or to apply the correct coating weight. To increase viscosity, thickeners are usually used that deteriorate the water sensitivity dramatically. It is therefore of interest to develop new systems that show a lower overall thickener demand at comparable viscosity and application properties, especially in but not limited to adhesive formulations.

It is, therefore, an object of the present invention to provide aqueous polymer dispersions which can be formulated in coating compositions, especially in adhesive formulations, in particular in aqueous flooring adhesive formulations, which have a reduced thickener amount.

The inventors now surprisingly found that when using branched acrylates, which contain a certain quantity of monomers selected from isobutyl acrylate, 2-ethyl hexyl acrylate and 2-octyl acrylate or mixtures thereof, as monomers for polymerization, the thickener demand can be reduced significantly without deteriorating other properties. Moreover, these monomers can be - at least with regard to their alkanol part - obtained from biological sources and thus allow for reducing the demand of fossil carbon in the production of the polymer latexes.

It was surprisingly found that the target to reduce thickener amount can be achieved by using an aqueous polymer latex of a copolymer obtainable by aqueous emulsion polymerisation of ethylenically unsaturated monomers M, which comprises

- 20 to 99% by weight, based on the total amount of monomers M, comprising at least one monomer M1, which is selected from iso butyl acrylate, 2-ethyl hexyl acrylate, 2-octyl acrylate or mixtures thereof

- 0 to 70% by weight, based on the total amount of monomers M, of at least one monomer M2, which is selected from ethyl acrylate, methyl acrylate, methylmeth acrylate, n-butyl acrylate, n-pentyl acrylate, $C_6$-$C_{20}$-alkyl esters of acrylic acid and $C_5$-$C_{20}$-alkyl esters of methacrylic acid and mixtures thereof;

- 5 to 20% by weight, based on the total weight of the monomers M, of at least one Monomer M3, which is a monoethylenically unsaturated carbonitrile;

- 0.01 to 3.0% by weight based on the total weight of the monomers M, of a monoethylenically unsaturated monomer M4 which has an acidic group such as a sulfonic, phosphonic, phosphoric or carboxylic acid group and

optionally further monomers M5 different from monomers M1 to M4 where the total amount of monomers M1, M2, M3 and M4 is at least 80%, preferably 90% by weight, based on the total amount of ethylenically unsaturated monomers M, and optionally further monomers M5 different from monomers M1 to M4.

Thus, the present invention relates to aqueous polymer dispersions made of ethylenically unsaturated monomers M as defined herein. The present invention also relates to a process for preparing the aqueous polymer dispersion of the present invention which comprises an aqueous emulsion polymerization, in particular free radical aqueous emulsion polymerization, of the monomers M. The present invention also relates to the aqueous polymer dispersions obtainable by this process.

Further the present invention relates to a coating composition which contains

a) 10 to 99 % by weight the aqueous polymer latex of a copolymer obtainable by aqueous emulsion polymerisation of ethylenically unsaturated monomers M, which comprises

- 20 to 99% by weight, based on the total amount of monomers M, comprising at least one monomer M1, which is selected from iso butyl acrylate, 2-ethyl hexyl acrylate, 2-octyl acrylate or mixtures thereof

- 0 to 70% by weight, based on the total amount of monomers M, of at least one monomer M2, which is selected from ethyl acrylate, methyl acrylate, methylmeth acrylate, n-butyl acrylate, n-pentyl acrylate, $C_6$-$C_{20}$-alkyl esters of acrylic acid and $C_5$-$C_{20}$-alkyl esters of methacrylic acid and mixtures thereof;

- 5 to 20% by weight, based on the total weight of the monomers M, of at least one Monomer M3, which is a monoethylenically unsaturated carbonitrile;

- 0.01 to 3.0% by weight based on the total weight of the monomers M, of a monoethylenically unsaturated monomer M4 which has an acidic group such as a sulfonic, phosphonic, phosphoric or carboxylic acid group and

optionally further monomers M5 different from monomers M1 to M4 where the total amount of monomers M1, M2, M3 and M4 is at least 80%, preferably 90% by weight, based on the total amount of ethylenically unsaturated monomers M, and optionally further monomers M5 different from monomers M1 to M4, as a binder and,
b) at least one further ingredient, which is conventionally used in coating compositions and which is not a binder.

Further the present invention relates to an aqueous adhesive formulation comprising

a) 10 to 99 % by weight of an aqueous polymer latex as defined above as a binder, based on the total amount of the formulation, and
b) at least one further ingredient, which is conventionally used in adhesive compositions and which is not a binder.

The present invention is associated with several benefits. The polymer dispersions of the present invention provide good adhesion and can be formulated in adhesive formulations, in particular in aqueous flooring adhesive formulations.

Therefore, further aspects of the present invention relate to use of the aqueous polymer dispersions of the present invention as a binder in coating compositions, especially as polymer adhesives/binders in an aqueous adhesive formulations, preferably in flooring adhesives.

The formulation can have a pH of at least pH 10, in particular in the range of pH 10.5 to pH 11.5, in particular in aqueous flooring adhesive formulations having a pH of at least pH 10, in particular in the range of pH 10.5 to pH 11.5, when used in adhesive formulations.

Here and throughout the specification, the terms "wt%", "% b.w." and "% by weight" are used synonymously.

Here and throughout the specification, the indefinite article "a" comprises the singular but also the plural, i.e. an indefinite article in respect to a component of a composition means that the component is a single compound or a plurality of compounds. If not stated otherwise, the indefinite article "a" and the expression "at least one" are used synonymously.

Here and throughout the specification, the term "pphm" means parts by weight per 100 parts of monomers and corresponds to the relative amount in % by weight of a certain monomer based on the total amount of monomers M.

Here and throughout the specification, the terms "ethoxylated" and "polyethoxylated" are used synonymously and refer to compounds having an oligo- or polyoxyethylene group, which is formed by repeating units $O$-$CH_2CH_2$. In

this context, the term "degree of ethoxylation" relates to the number average of repeating units O-CH$_2$CH$_2$ in these compounds.

Here and throughout the specification, the term "ethylenically unsaturated" means that the respective compound, i.e. the monomer, has at least one C=C double bond which is capable to undergo a chain-growth polymerization reaction. Here and throughout the specification, the term "monoethylenically unsaturated" means that the respective compound, i.e. the monomer, has exactly 1 C=C double bond which is capable to undergo a chain-growth polymerization reaction.

Here and throughout the specification, the term "non-ionic" in the context of compounds, especially monomers, means that the respective compound does not bear any ionic functional group or any functional group which can be converted by protonation or deprotonation into an ionic group.

Here and throughout the specification, the term "alkyl acrylate" refers to an alkyl ester of acrylic acid. Likewise, the term "alkyl methacrylate" refers to an alkyl ester of methacrylic acid. In the alkyl acrylates and the alkyl methacrylates the alkyl radical corresponds to the alkanol with which acrylic acid or methacrylic acid is esterified.

Here and throughout the specification, the prefixes C$_n$-C$_m$ used in connection with compounds or molecular moieties each indicate a range for the number of possible carbon atoms that a molecular moiety or a compound can have. The term "C$_1$-C$_n$ alkyl" denominates a group of linear or branched saturated hydrocarbon radicals having from 1 to n carbon atoms. The term "C$_n$/C$_m$ alkyl" denominates a mixture of two alkyl groups, one having n carbon atoms while the other having m carbon atoms.

For example, the term C$_1$-C$_{20}$ alkyl denominates a group of linear or branched saturated hydrocarbon radicals having from 1 to 20 carbon atoms, while the term C$_1$-C$_6$ alkyl denominates a group of linear or branched saturated hydrocarbon radicals having from 1 to 6 carbon atoms and the C$_5$-C$_{20}$ alkyl denominates a group of linear or branched saturated hydrocarbon radicals having from 5 to 20 carbon atoms. Examples of alkyl include but are not limited to methyl, ethyl, n-propyl, isopropyl, n-butyl, sec-butyl, isobutyl, tert-butyl, 2-methylpropyl (isopropyl), 1,1-dimethylethyl (tert-butyl), pentyl, 1-methylbutyl, 2-methylbutyl, 3-methylbutyl, 2,2-dimethylpropyl, 1-ethylpropyl, hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, n-heptyl, 2-heptyl, n-octyl, 2-octyl, 2-ethylhexyl, nonyl, isononyl, decyl, undecyl, dodecyl, tridecyl, isotridecyl, tetradecyl, pentadecyl, hexadecyl, heptadecyl, octadecyl, nonadecyl, eicosyl, heneicosyl docosyl and in case of nonyl, isononyl, decyl, undecyl, dodecyl, tridecyl, isotridecyl, tetradecyl, pentadecyl, hexadecyl, heptadecyl, octadecyl, nonadecyl, eicosyl, heneicosyl docosyl their isomers, in particular mixtures of isomers such as "isononyl", "isodecyl". Examples of C$_1$-C$_4$-alkyl are for example methyl, ethyl, propyl, 1-methylethyl, butyl, 1-methylpropyl, 2-methylpropyl or 1,1-dimethylethyl.

The term "C$_5$-C$_{20}$-cycloalkyl" as used herein refers to an mono- or bicyclic cycloaliphatic radical which is unsubstituted or substituted by 1, 2, 3 or 4 methyl radicals, where the total number of carbon atoms of C$_5$-C$_{20}$-cycloalkyl from 5 to 20. Examples of C$_5$-C$_{20}$-cycloalkyl include but are not limited to cyclopentyl, cyclohexyl, methylcyclohexyl, dimethylcyclohexyl, cycloheptyl, cyclooctyl, cyclododecyl, cyclohexadecyl, norbornyl (= bicyclo[2.2.1]heptyl) and isobornyl (= 1,7,7-trimethylbicyclo[2.2.1]heptyl). In cycloalkyl, 1 or 2 of the CH$_2$ groups may be replaced by non-adjacent oxygen ring atoms, resulting in heterocycloaliphatic radicals. Examples of such radicals include, but are not limited to oxolan-2-yl, oxolan-3-yl, oxan-2-yl, oxan-3-yl, oxan-4-yl, 1,3-dioxolan-2-yl, 1,3-dioxolan-4-yl, 2,2-dimethyl-1,3-dioxolan-4-yl, 1,4-dioxan-2-yl, 1,3-dioxan-2-yl, 1,3-dioxan-4-yl, 1,3-dioxan-5-yl, 2,2-dimethyl-1,3-dioxan-4-yl, 2,2-dimethyl-1,3-dioxan-5-yl.

The term "C$_5$-C$_{20}$-cycloalkylmethyl" as used herein refers to a C$_5$-C$_{20}$-cycloalkyl radical as defined herein, which is bound via a methylene group.

Linear C$_1$-C$_8$ linear saturated hydrocarbon radicals include ethyl, n-propyl, n-butyl, n-pentyl and n-hexyl, n-heptyl, 1-octyl.

Branched saturated hydrocarbon radicals having 3 to 20 carbon atoms include but are not limited to 2-propyl, 2-butyl, isobutyl, tert.-butyl, 2-pentyl, 3-pentyl, 2-methyl-1-butyl, 3-methyl-1-butyl, 2,2-dimethylpropyl, 1,2-dimethylpropyl, 2-hexyl, 3-hexyl, 2-methylpentyl, 3-methylpentyl, 4-methylpentyl, 1,2-dimethylbutyl, 1,3-dimethylbutyl, 2,2-dimethylbutyl, 2,3-dimethylbutyl, 2-ethyl-1-butyl, 2-heptyl, 3-heptyl, 4-heptyl, 2-methyl-1-hexyl, 2-ethyl-1-pentyl, 2,2-dimethylpentyl, 2-octyl, 3-octyl, 3-octyl, 2-methyl-1-heptyl, 3-methyl-1-heptyl, 2-ethyl-hexyl, 1,3-dimethylhexyl, 1,4-dimethylhexyl, 2,3-dimethylhexyl, 2,4_dimethylhexyl, 2,2,4-dimethylhexyl, 1,3,5-dimethylhexyl, 2-nonyl, 2-methyloctyl, 3-methyloctyl, 2-ethylheptyl, 2-decyl, 2-methylnonyl, 2-ethyloctyl, 2-propylheptyl, 2-undecyl, 2-dodecyl, 1,3,5,7,-tetramethyloctyl, 2,2,4,4,6-pentamethylheptyl, 2-tridecyl, 2-tetradecyl, 2-pentadecyl, 2-hexadecyl, 2-heptadecyl, 2-octadecyl, 2-nonadecyl, 2-eicosyl, etc.

According to the invention, the monomers M comprise at least one monomer M1 selected from isobutyl acrylate, 2-ethyl hexyl acrylate, 2-octyl acrylate, or mixtures thereof. In particular, the monomers M1 comprise at least 20% by weight, in particular at least 50% by weight of isobutyl acrylate and 2-octyl acrylate, based on the total amount of monomers M1.

Isobutyl acrylate is produced by esterification of acrylic acid with isobutanol (2-methylpropan-1-ol). Isobutanol alcohol can be produced on large scale by fermentation of cellulose containing raw material and thus from biological sources or renewable raw materials, respectively.

In some preferred embodiments, at least part of the 2-octyl acrylate has been produced from renewable raw materials, i. e. at least part of the 2-octyl acrylate of component a) is a bio-based 2-octyl acrylate that has been partially or completely obtained from renewable raw materials. Also mixtures of 2-octyl acrylate obtained from fossil raw materials and 2-octyl acrylate partially or completely obtained from renewable raw materials can be used.

2-Octyl acrylate can be e.g. synthesized by esterification of acrylic acid with 2-octanol or transesterification of e.g. methyl acrylate or ethyl acrylate with 2-octanol.

Preferably, the bio-based 2-octyl acrylate acrylate is obtained by the reaction of 2-octanol with acrylic acid. Hereby, the 2-octanol and/or the acrylic acid and/or methyl acrylate and/or ethyl acrylate are at least partially produced from renewable raw materials.

Bio-based 2-octanol from renewable raw materials can be obtained from castor oil.

Acrylic acid from renewable raw materials can be prepared e.g. according to WO 2006/092272 or DE 10 2006 039 203 A or EP 2 922 580.

Therefore, including monomers M1 into the polymer latex significantly increases the amount of bio-carbon in the polymer latex and thereby reduces the demand of fossil carbon.

Therefore, a particular embodiment of the invention relates to a polymer latex as defined herein, wherein the at least the carbon atoms of the isobutyl group and the 2-octyl group in the monomers M1 are of biological origin, i.e. e. they are at least partly made of bio-carbon. In particular, the iso-butanol and 2-octanol used for the production of the monomers M1 preferably have a content of bio-carbon of at least 90 mol-%, based on the total amount of carbon atoms in isobutanol and 2-octanol, respectively. Similarly, acrylic acid may be produced from renewable materials. However, acrylic acid produced from biomaterials is not available on large scale so far. Consequently, the monomers M1 have a content of bio-carbon of preferably at least 51 mol%, in particular at least 54 mol-% and especially at least 57 mol-%, based on the total amount of carbon atoms in isobutyl acrylate and 2-octyl acrylate, respectively. By using monomers M1, which are at least partly of biological origin, the demand of fossil carbon in the polymer latex can be significantly reduced. In particular, the amount of carbon of biological origin of at least 10 mol-%, in particular at least 15 mol-% or at least 20 mol-% or higher, e.g. 30 mol-% or 40 mol-% or higher can be achieved.

It is also possible that at least part of the educts used to synthesize the monomer composition M are from renewable raw materials according to the mass balance approach. Accordingly, in addition to fossil feeds, also renewable feeds such as bio-naphtha (as e.g. described in EP 2 290 045 A1 or EP 2 290 034 A1) enter the chemical production system, such as a steam cracker. The renewable feeds are converted into products along the chemical value chain, such as acrylic acid, butyl acrylate, methyl methacrylate or acrylamide. The content of renewable material of these products is defined by the mass balance approach and can be allocated to these products.

The term "bio-carbon" indicates that the carbon is of biological origin and comes from a biomaterial/renewable resources. The content in bio-carbon and the content in biomaterial are expressions that indicate the same value. A material of renewable origin or biomaterial is an organic material wherein the carbon comes from the $CO_2$ fixed recently (on a human scale) by photosynthesis from the atmosphere. A biomaterial (Carbon of 100% natural origin) has an isotopic ratio $^{14}C/^{12}C$ greater than $10^{-12}$, typically about $1.2 \times 10^{-12}$, while a fossil material has a zero ratio. Indeed, the isotopic $^{14}C$ is formed in the atmosphere and is then integrated via photosynthesis, according to a time scale of a few tens of years at most. The half-life of the $^{14}C$ is 5,730 years. Thus, the materials coming from photosynthesis, namely plants in general, necessarily have a maximum content in isotope $^{14}C$. The determination of the content of biomaterial or of bio-carbon is can be carried out in accordance with the standards ASTM D 6866-12, the method B (ASTM D 6866-06) and ASTM D 7026 (ASTM D 7026-04).

The total amount of monomers M1 is preferably in the range of 20 to 99% by weight or 22 to 97,5% by weight, based on the total weight of monomers M.

According to the invention, the monomers M comprise at least one monomer M2 from 0 to 70% by weight, based on the total amount of monomers M, of at least one monomer M2, which is selected from ethyl acrylate, methyl acrylate, methylmeth acrylate, n-butyl acrylate, n-pentyl acrylate, $C_6$-$C_{20}$-alkyl esters of acrylic acid and $C_5$-$C_{20}$-alkyl esters of methacrylic acid and mixtures thereof, preferably from ethyl acrylate, n-butyl acrylate, or mixtures thereof.

The monomers M forming the polymer of the aqueous polymer dispersion further comprise a monoethylenically unsaturated carbonitrile, monomer M3. The monoethylenically unsaturated carbonitrile has preferably 3 to 6 carbon atoms. The ethylenically unsaturated double bond is preferably in conjugation to the nitrile group. Examples of monomers M3 include acrylonitrile and methacrylonitrile with particular preference given to acrylonitrile. The amount of the monomer M3 is in particular from 5 to 20% by weight, especially 5 to 15% by weight, based on the total weight of the monomers M.

The monomers M forming the polymer of the aqueous polymer dispersion further comprise a monoethylenically unsaturated monomer M4 which has an acidic group such as a sulfonic, phosphonic, phosphoric or carboxylic acid group. The monomer may be present in the acidic form or in the neutralized form, e.g. in the form of a salt, in particular as an alkali metal salt or ammonium salt. If present, the amount of monomers M4 is preferably in the range of 0.01 to 3.0 % by weight, especially 0.05 to 2.5% by weight, based on the total weight of the monomers M. The relative amounts of monomers M4 given here relate to the acidic form of the monomers M4.

Examples of monomers M4 include monoethylenically unsaturated sulfonic acids such as vinylsulfonic acid, allylsulfonic acid, styrenesulfonic acid, 2-acrylamido-2-methylpropane sulfonic acid, monoethylenically unsaturated phosphonic acids such as vinylphosphonic acid, allylphosphonic acid, styrenephosphonic acid and 2-acrylamido-2-methylpropane phosphonic acid, monoethylenically unsaturated phosphoric acids such as monophosphates of hydroxyalkyl acrylates, monophosphates of hydroxyalkyl methacrylates, monophosphates of alkoxylated hydroxyalkyl acrylates and monophosphates of alkoxylated hydroxyalkyl methacrylates, for example. Preferably, the monomers M4 are monoethylenically unsaturated carboxylic acids, in particular $C_3$ to $C_6$, especially $C_3$ or $C_4$ monocarboxylic acids or $C_4$ to $C_6$ dicarboxylic acids such as acrylic acid, methacrylic acid, ethylacrylic acid, itaconic acid, allylacetic acid, crotonic acid, vinylacetic acid, fumaric acid, maleic acid, and 2-methylmaleic acid. Particular preference is given to acrylic acid and/or methacrylic acid as monomers M4.

The monomers M forming the polymer of the aqueous polymer dispersion may further comprise copolymerizable, ethylenically unsaturated compounds M5 which are different form monomers M1 to M4.

Examples of monomer M5 is a monoethylenically unsaturated monomer M5 a, whose homopolymer has a glass transition temperature of at least 60°C, in particular at least 80°C, e.g. 60 to 200°C or 80 to 180°C. The monomer Mc is, therefore, different from monomers Ma, whose homopolymers have significantly lower glass transition temperatures. The glass transition temperature for the homopolymers of monomers Mc are known from the above references, or they can also be determined experimentally by the differential scanning calorimetry (DSC) method as described above.

The monomer M5a is also different from monomers M4 because it is non-ionic and thus does not bear an acid group. By definition, the monomer M5a is also different from the monomers M3, M5b and M5c. The monomer M5a is typically a non-polar monomer. Therefore, its solubility in deionized water at 20°C and 1 bar is typically below 50 g/L, in particular below 30 g/L and thus lower than the solubility of monomers M3 which typically have solubility in deionized water of above 50 g/L at 20°C and 1 bar. Moreover, the monomers M5a is typically not crosslinkable.

Preferably, the monomer M5a comprises or is at least one vinylaromatic hydrocarbon monomer, such as styrene, alpha-methylstyrene and vinyl toluene with preference given to styrene. Further possible monomers Mc include alkyl esters of methacrylic acid having a linear or branched alkyl radical of 1 to 4 carbon atoms, hereinafter also termed $C_1$-$C_4$-alkyl methacrylates, in particular $C_3$-$C_4$-alkyl methacrylates, wherein the alkyl radical is branched such as in isopropyl methacrylate and tert.-butyl. methacrylate and cylcoalkyl methacrylates such as cyclohexyl methacylate or isobornyl methacrylate. In particular, the monomer M5a comprises or is at least one vinylaromatic hydrocarbon monomer, and is in particular styrene. The amount of the vinylaromatic monomer, in particular styrene, is in particular at least 50% by weight, especially at least 80% by weight and up to 100% by weight, based on the total amount of monomer M5a. Especially, the monomer M5a is at least one vinylaromatic hydrocarbon monomer, and is in particular styrene.

If present, the amount of monomer M5a is in the range of 1 to 25% by weight, in particular 2 to 20% by weight, especially 4 to 20% by weight, based on the total weight of the monomers M; preferably monomer M5a is not present.

It is apparent that the upper limitation of these weight ranges will have to be adapted depending on the amount of monomers M4, M5b and M5c In particular, the total amount of monomers M4, M5b and M5c will usually not exceed 8% by weight, in particular 5% by weight, based on the total weight of the monomers M and is typically in the range of 0.01 to 10% by weight or 0.01 to 8% by weight, in particular in the range of 0.05 to 8% by weight or 0.05 to 5% by weight, more particularly 0.1 to 8% by weight or 0.1 to 5% by weight and especially 0.15 to 8% by weight or 0.15 to 5% by weight, based on the total weight of the monomers M. It is also apparent that these upper limits will have to be adapted such that the total amount of monomers M1, M2, M3, M4, M5a,M5b and M5c will not exceed 100% by weight.

The monomers M forming the polymer of the aqueous polymer dispersion may comprise an ethylenically unsaturated monomer M5b which, on its own or with a crosslinking agent, has a crosslinking effect. The monomers M5b customarily increase the internal strength of a polymer film formed from the aqueous polymer dispersion and thus increases cohesion. The total amount of monomers M5b, if present, is typically in the range of 0.01 to 5% by weight, in particular in the range of 0.05 to 4% by weight and especially in the range of 0.1 to 3% by weight, based on the total weight of the monomers M.

Monomers M5b may be monoethylenically unsaturated and have at least one reactive functional group which is susceptible to form with another reactive functional group a covalent bond and thereby crosslink the polymer chains formed from the monomers M. This type of monomer is hereinafter termed monomer M5b(1). The functional group may be capable of reacting with itself, hereinafter monomers M5b(1.1), or with other functional groups within the polymer formed by the polymerization of the monomers M or with an external crosslinking agent, hereinafter monomers M5b(1.2). Functional reactive groups in monomers M5b(1) include e.g. epoxy, hydroxyl, N-methylol, aldehyde, acetoxyacetyl, hydrolysable silane and keto-carbonyl groups. The total amount of monomers M5b(1), if present, is typically in the range of 0.01 to 5% by weight, in particular in the range of 0.05 to 4% by weight and especially in the range of 0.1 to 3% by weight, based on the total weight of the monomers M.

Typical classes of self-crosslinking monomers M5b(1.1) are N-alkylol amides, in particular N-methylolamides of monoethylenically unsaturated carboxylic acids having 3 to 6 C atoms, and also their ethers with alkanols having 1 to 4 C atoms, very preferably N-methylolacrylamide and N-methylolmethacrylamide and the methoxy or ethoxy ethers thereof. Typical classes of self-crosslinking monomers M5b(1.1) are also monoethylenically unsaturated monomers having a hydrolysable silane-functional group, in particular a trialkoxylsilane group such as vinyltriethoxysilane, vinyltriisopropoxysilane, vinyltrimethoxysilane, methacryloyloxypropyltrimethoxysilane, methacryloyloxypropyltriethoxysilane, and oligomeric vinylsilanes (e.g., Dynasylan 6490, Evonik).

Typical classes of monomers M5b(1.2) are monoethylenically unsaturated monomers having a crosslinker group selected from keto carbonyl, aldehyde and acetoacetoxy groups. Here, the polymer dispersion of the invention can be formulated with a crosslinking agent having amino groups, hydrazine groups, hydrazide groups or semicarbazide groups. Such crosslinking agents comprise polyamines or polyhydrazides, in particular dihydrazides, especially dihydrazides of aliphatic dicarboxylic acids having 2 to 10 carbon atoms such as adipic dihydrazide (ADDH) or oxalic dihydrazide, dihydrazides of aromatic dicarboxylic acids such as phthalic dihydrazide, terephthalic dihydrazide, or diamines such as isophoronediamine and 4,7-dioxadecane-1,1-O-diamine. Examples of monomers having an keto carbonyl, aldehyde or acetoacetoxy group include e.g. acetoacetoxyethyl acrylate, acetoacetoxypropyl methacrylate, acetoacetoxybutyl methacrylate, 2-(acetoacetoxy)ethyl methacrylate, diacetoneacrylamide (DAAM) and diacetonemethacrylamide.

Typical classes of monomers M5b(1.2) are also monoethylenically unsaturated monomers having a crosslinker group selected from ureido groups, i.e. a cyclic or non-cyclic urea group in addition to the ethylenically unsaturated double bond. Examples of monomers having an ureido group include e.g. 2-(2-oxo-imidazolidin-1-yl)ethyl acrylate, 2-(2-oxo-imidazolidin-1-yl)ethyl methacrylate, which are also termed 2-ureido (meth)acrylate, N-(2-acryloxyethyl)urea, N-(2-methacryloxyethyl)urea, N-(2-(2-oxo-imidazolidin-1-yl)ethyl) acrylamide, N-(2-(2-oxoimidazolidin-1-yl)ethyl) methacrylamide, 1-allyl-2-oxoimidazolin and N-vinylurea. Here, the polymer dispersion of the invention will be formulated with a crosslinking agent having aldehyde groups, suitable compounds including e.g. polyaldehydes, as for example a $\alpha,\omega$-dialdehyde having one to ten C atoms, such as glyoxal, glutarialdehyde or malonialdehyde, and/or the acetals and hemiacetals thereof; see EP 0789724.

The total amount of monomers M5b(1.2), if present, is typically in the range of 0.05 to 5% by weight, in particular in the range of 0.1 to 4% by weight and especially in the range of 0.2 to 3% by weight, based on the total weight of the monomers M.

The amount of the crosslinking compound is typically chosen such that the molar ratio of reactive groups in the polymer of the polymer dispersion to the reactive groups of the crosslinking agent is in the range of 1:1.5 to 1.5:1.

Preference is given to polymer dispersions, where the monomers M and hence the monomers M5b comprise at least one monomer M5b(1.2) having a keto carbonyl group such as diacetone acrylamide and diacetone methacrylamide. Polymers containing a monomer with a keto carbonyl group are typically formulated with a dihydrazide such as adipic dihydrazide (ADDH).

Preference is also given to polymer dispersions, where the monomers M and hence the monomers M5b comprise at least one monomer M5b(1.2) which has an acetoacetoxyethyl group, examples of such monomers M5b(1.2) being acetoacetoxyethyl methacrylate.

Preference is also given to polymer dispersions, where the monomers M and hence the monomers M5b comprise at least one monomer M5b(1.1) having a trialkoxylsilane group such as vinyltriethoxysilane, vinyltriisopropoxysilane, vinyltrimethoxysilane, methacryloyloxypropyltrimethoxysilane, methacryloyloxypropyltriethoxysilane.

Instead of the functional groups, the monomers M5b may have at least two nonconjugated ethylenically unsaturated double bonds, which are hereinafter referred to as monomers M5b(2). Examples of suitable monomers M5b(2) include

- polyacrylic esters, polymethacrylic esters, polyallyl ethers or polyvinyl ethers of polyhydric alcohols having at least 2 OH groups, e.g. 2 to 6 OH groups, hereinafter monomers Me(2.1). The OH groups of the polyhydric alcohols may be completely or partly etherified or esterified, provided that on average they bear at least 2, e.g. 2 to 6 ethylenically unsaturated double bounds. Examples of the polyhydric alcohol components in such crosslinkers Me(2.1) include, but are not limited to dihydric alcohols such as 1,2-ethanediol, 1,2-propanediol, 1,3-propanediol, 1,2-butanediol, 1,3-butanediol, 2,3-butanediol, 1,4-butanediol, but-2-ene-1,4-diol, 1,2-pentanediol, 1,5-pentanediol, 1,2-hexanediol, 1,6-hexanediol, 1,10-decanediol, 1,2-dodecanediol, 1,12-dodecanediol, neopentyl glycol, 3-methylpentane-1,5-diol, 2,5-dimethyl-1,3-hexanediol, 2,2,4-trimethyl-1,3-pentanediol, 1,2-cyclohexanediol, 1,4-cyclohexanediol, 1,4-bis(hydroxymethyl)cyclohexane, hydroxypivalic acid neopentyl glycol monoester, 2,2-bis(4-hydroxyphenyl)propane, 2,2-bis[4-(2-hydroxypropyl)phenyl]propane, diethylene glycol, triethylene glycol, tetraethylene glycol, dipropylene glycol, tripropylene glycol, tetrapropylene glycol, 3-thiapentane-1,5-diol, and also polyethylene glycols, polypropylene glycols, block copolymers of ethylene oxide or propylene oxide, random copolymers of ethylene oxide and propylene oxide and polytetrahydrofurans having molecular weights of in each case 200 to 10 000. Examples of polyhydric alcohols having more than two OH groups are trimethylolpropane, glycerol, pentaerythritol, 1,2,5-pentanetriol, 1,2,6-hexanetriol, cyanuric acid, sorbitan, sugars such as sucrose, glucose, and mannose. The polyhydric alcohol components in such crosslinkers Me(2.1) having more than two OH groups can be alkoxylated with ethylene oxide or propylene oxide;

- monoesters of monoethylenically unsaturated $C_3$-$C_6$ monocarboxylic acids, in particular of acrylic acid or methacrylic acid, with monoethylenically unsaturated aliphatic or cycloaliphatic monohydroxy compounds, hereinafter monomers M5b(2.2). Examples include vinyl acrylate, vinyl methacrylate, allyl acrylate, allyl methacrylate, cyclohex-2-enyl acrylate, cyclohex-2-enyl methacrylate, norbornenyl acrylate and norbornenyl methacrylate;

- straight-chain or branched, linear or cyclic, aliphatic or aromatic hydrocarbons which possess at least two double bonds which in the case of aliphatic hydrocarbons must not be conjugated, hereinafter monomers M5b(2.3). Examples include divinylbenzene, divinyltoluene, 1,7-octadiene, 1,9-decadiene, 4-vinyl-1-cyclohexene, trivinylcyclohexane or polybutadienes having molecular weights of 200 to 20 000, in particular divinyl aromatic compounds such as 1,3-divinyl benzene,1,4-divinyl benzene.

In case the monomers M comprise a monomer M5b(2), crosslinking takes place during the polymerization of the monomers M. Crosslinking thus takes place before actual film formation.

The total amount of monomers M5b(2), if present, is preferably in the range of 0.01 to 2% by weight, in particular in the range of 0.02 to 1.5% by weight and especially in the range of 0.05 to 1% by weight, based on the total weight of the monomers M.

In very preferred groups of embodiments of the present invention, the monomers M5b are selected from the group of monomers M5b(1.2), in particular a monomer M5b(1.2) having a keto carbonyl group such as in diacetone acrylamide (N-(1,1-dimethyl-3-oxobutyl)acrylamid) or in diacetone methacrylamide (N-(1,1-dimethyl-3-oxobutyl)methacrylamid). Therefore, very preferred groups of embodiments of the present invention relate to aqueous polymer dispersions, where the monomers M comprise a monomer M5b and where the monomer M5b comprises a monomer M5b(1.2), in particular a monomer M5b(1.2) having a keto carbonyl group such as diacetone acrylamide and diacetone methacrylamide. Consequently, very preferred groups of embodiments of the present invention relate to aqueous polymer dispersions, where the monomers M comprise a monomer M5b and where the monomer M5b comprises a monomer M5b(1.2), in particular a monomer M5b(1.2) having a keto carbonyl group such as diacetone acrylamide and where the aqueous polymer dispersion is formulated with a suitable external crosslinking agent, in particular with a dihydrazide, in case the monomer M5b comprises a monomer M5b(1.2) having a keto carbonyl group. The total amount of monomers M5b(1.2), if present, is typically in the range of 0.01 to 5% by weight, in particular in the range of 0.05 to 4% by weight and especially in the range of 0.1 to 3% by weight, based on the total weight of the monomers M.

The monomers M forming the polymer of the aqueous polymer dispersion may comprise a monoethylenically unsaturated monomer M5c as defined herein. The monomers M5c is nonionic and thus different from monomers M4. Due to its high water solubility it is also different from the monomers M1, M2, M3 and M5a which typically have a solubility in deionized water of less than 100 g/L at 20°C and 1 bar. By definition, it is also different from the monomers M5b. If present, the amount of monomers M5c is typically in the range of 0.1 to 5% by weight, in particular 0.2 to 4% by weight, based on the total weight of the monomers M.

Typical monomers M5c are primary amides of monoethylenically unsaturated monocarboxylic acids having 3 to 6 carbon atoms such as acrylamide and methacrylamide and hydroxyalkyl esters of monoethylenically unsaturated monocarboxylic acids having 3 to 6 carbon atoms, in particular of acrylic acid or methacrylic acid such as 2-hydroxyethyl acrylate, 2- or 3-hydroxypropyl acrylate, 4-hydroxybutyl acrylate, 2-hydroxyethyl methacrylate, 2- or 3-hydroxypropyl methacrylate and 4-hydroxybutyl methacrylate.

In general, the polymers in the aqueous polymer dispersions of the present invention which are formed from the polymerized monomers M have a glass transition temperature $T_g$ of at most 0°C, in particular at most -5°C, e.g. in the range from -60 to 0°C, in particular in the range from - 50 to -5°C, especially in the range from -40 to -10°C. However, the glass transition temperature $T_g$ may also be somewhat higher, e.g. up to +10°C.

The actual glass transition temperature depends on the composition of monomers M which form the polymer in the polymer dispersion, i.e. from the type and relative amount of monomers Ma1, Ma2, Mb and optional monomers Mc, Md, Me and Mf, if present. A theoretical glass transition temperature can be calculated from the composition monomer M used in the emulsion polymerization. The theoretical glass transition temperatures are usually calculated from the composition of monomers by the Fox equation:

$$1/Tg(F) = x_1/Tg_1 + x_2/Tg_2 + \ldots x_n/Tg_n.$$

In this equation, $x_1$, $x_2$, .... $x_n$ are the mass fractions of the different monomers 1, 2, .... n, and $Tg_1$, $Tg_1$, .... $Tg_n$ are the actual glass transition temperatures in Kelvin of the homopolymers synthesized from only one of the monomers 1, 2, .... n at a time. Tg(F) is the theoretical glass transition temperature according to Fox. The Fox equation has been described by T. G. Fox in Bull. Am. Phys. Soc. 1956, 1, page 123 and can also be found in Ullmann's Encyclopädie der technischen Chemie [Ullmann's Encyclopedia of Industrial Chemistry], vol. 19, p. 18, 4th ed., Verlag Chemie, Weinheim, 1980 Further sources of glass transition temperatures of homopolymers are, for example, J. Brandrup, E. H. Immergut, Polymer Handbook, 1st Ed., J. Wiley, New York 1966, 2nd Ed. J. Wiley, New York 1975, 3rd Ed. J. Wiley, New York 1989 and 4th Ed. J. Wiley, New York 2004 and Crow polymer data base (www.polymerdatabase.com). The actual Tg values for the homopolymers of most monomers are known and listed in the references cited above or they can be determined as described above.

They can also be determined experimentally by the differential scanning calorimetry (DSC) method as the midpoint temperature when evaluating the second heating curve at a heating rate of 20 K/min. according to ISO 11357-2:2013, preferably with sample preparation according to ISO 16805:2003 .

For the purposes of the invention, it has been found beneficial, if the particles of the polymer contained in the polymer latex have a Z-average particle diameter in the range from 80 to 800 nm, in particular in the range from 100 to 500 nm, as determined by quasi-elastic light scattering.

If not stated otherwise, the size of the particles as well as the distribution of particle size is determined by quasi-elastic light scattering (QELS), also known as dynamic light scattering (DLS). The measurement method is described in the ISO 13321:1996 standard.

The determination can be carried out using a High-Performance Particle Sizer (HPPS). For this purpose, a sample of the aqueous polymer latex will be diluted, and the dilution will be analyzed. In the context of QELS, the aqueous dilution may have a polymer concentration in the range from 0.001 to 0.5% by weight, depending on the particle size. For most purposes, a proper concentration will be 0.01% by weight. However, higher or lower concentrations may be used to achieve an optimum signal/noise ratio. Measurement configuration: HPPS from Malvern, automated, with continuous-flow cuvette and Gilson autosampler. Parameters: measurement temperature 20.0°C; measurement time 120 seconds (6 cycles each of 20 s); scattering angle 173°; wavelength laser 633 nm (HeNe); refractive index of medium 1.332 (aqueous); viscosity 0.9546 mPa s. The measurement gives an average value of the second order cumulant analysis (mean of fits), i.e. Z average. The "mean of fits" is an average, intensity-weighted hydrodynamic particle diameter in nm.

The hydrodynamic particle diameter can also be determined by hydrodynamic chromatography fractionation (HDC), as for example described by H. Wiese, "Characterization of Aqueous Polymer Dispersions" in Polymer Dispersions and Their Industrial Applications (Wiley-VCH, 2002), pp. 41-73. For further details, reference is made to the examples and the description below.

The particle size distribution of the polymer particles contained in the polymer dispersion may be monomodal or almost monomodal which means that the distribution function of the particle size has a single maximum. However, the particle size distribution of the copolymer particles contained in the polymer latex is preferably polymodal, e.g. bimodal, which means that the distribution function of the particle size has at least two maxima and or unstructured particle size distribution. Preferably, the particle size distribution has a half-value width h1/2, i.e. a full width at half maximum (FWHM) of preferably at least 1/4 dmax, in particular at least 1/2 dmax, where dmax is the diameter at the maximum of the particle size distribution.

In particularly preferred groups of embodiments, the polymers are formed by the monomers M which comprise or consist of:

(i) from 20 to 95% by weight, based on the sum of all monomers M, of 2-octyl acrylate, and iso butyl acrylate or mixtures thereof;
(ii) from 0.01 to 3% by weight, based on the sum of all monomers M, of at least one monomer having at least one acid group;
(iii) from 0 to 70% by weight, based on the sum of all monomers M, of ethyl acrylate;
(iv) from 5 to 60 % by weight, based on the sum of all monomers M n-butyl acrylate,
(v) from 0 to 60% by weight, based on the sum of all monomers M, of 2-ethylhexyl acrylate;
(vi) 5 to 28% by weight, based on the total weight of the monomers M, of at least one monoethylenically unsaturated carbonitrile
(vii) optionally further monomers different from (i) to (vi),

wherein the glass transition temperature of the polymer latex is between -60 to 0°C calculated according to Fox.

Preferably, the aqueous polymer dispersions of the present invention have a pH of at least pH 7, e.g. in the range of pH 7 to pH 9, prior to the use in the adhesive composition.

The aqueous polymer dispersions of the present invention generally have solids contents in the range of 30 to 75% by weight, preferably in the range of 40 to 65% by weight, in particular in the range of 45 to 60% by weight. The solids content describes the proportion of nonvolatile fractions. The solids content of a dispersion is determined by means of a balance with infrared moisture analysis. In this determination, a quantity of polymer dispersion is introduced into the instrument, heated to 140°C and subsequently held at that temperature. As soon as the average decrease in weight falls below 1 mg within 140 seconds, the measurement procedure is ended. The ratio of weight after drying to original mass introduced gives the solids content of the polymer dispersion. The total solids content of the formulation is determined arithmetically from the amounts of the substances added and from their solids contents and concentrations.

Besides the polymer and the optional crosslinking agent, the aqueous polymer dispersions of the present invention may contain further ingredients conventionally present in aqueous polymer dispersions. These further ingredients are, for example, surface active compounds, such as emulsifiers, protective colloids, defoamers and the like. Further ingredients may also be acids, bases, buffers, decomposition products from the polymerization reaction, deodorizing compounds, and chain transfer agents. The amount of the respective individual component will typically not exceed 1.5 wt%, based on the total weight of the polymer dispersion. The total amount of these stated components will typically not exceed 5 wt%, based on the total weight of the polymer dispersion.

Preferably, the amount of volatile organic matter, i.e. the content of organic compounds with boiling points up to 250°C under standard conditions (101,325 kPa) as determined by ISO 17895:2005 via gas-chromatography is less than 0.5 % by weight, in particular less than 0.2% by weight, based on the total weight of the polymer dispersion.

Preferably, the aqueous polymer does not contain any organic biocides or less than 700 ppm of organic biocides.

The aqueous polymer dispersion also contains an aqueous phase, wherein the particles of the polymer are dispersed. The aqueous phase, also termed serum, consists essentially of water and any water-soluble further ingredients. The total concentration of any further ingredient will typically not exceed 10 wt%, in particular 8% by weight, based on the total weight of the aqueous phase.

If the polymer dispersion contains a carbohydrate, the amount of carbohydrate is typically less than 5% by weight, based on the total weight of the aqueous polymer dispersion, or less than 10% by weight, based on the total weight of the polymer formed from the polymerized monomers M. In particular, the polymer dispersion does not contain a carbohydrate at all or less than 2% by weight, based on the total weight of the aqueous polymer dispersion.

The aqueous polymer dispersions of the present invention can be prepared by any method for preparing an aqueous dispersion of a polymer made of polymerized monomers M. In particular, aqueous polymer dispersions of the present invention are prepared by an aqueous emulsion polymerization, in particular by a free radical aqueous emulsion polymerization of the monomers M. The term "free radical aqueous emulsion polymerization" means that the polymerization of the monomers M is initiated by radicals formed by the decay of a polymerization initiator, whereby free radicals are formed in the polymerization mixture. It is therefore also termed "radically initiated emulsion polymerization". The procedure for radically initiated emulsion polymerizations of monomers in an aqueous medium has been extensively described and is therefore sufficiently familiar to the skilled person [cf. in this regard Emulsion Polymerization in Encyclopedia of Polymer Science and Engineering, vol. 8, pages 659 ff. (1987); D.C. Blackley, in High Polymer Latices, vol. 1, pages 35 ff. (1966); H. Warson, The Applications of Synthetic Resin Emulsions, chapter 5, pages 246 ff. (1972); D. Diederich, Chemie in unserer Zeit 24, pages 135 to 142 (1990); Emulsion Polymerisation, Interscience Publishers, New York (1965); DE-A 40 03 422; and Dispersionen synthetischer Hochpolymerer, F. Hölscher, Springer-Verlag, Berlin (1969)]. The radically initiated aqueous emulsion polymerization is typically carried out by emulsifying the ethylenically unsaturated monomers in the aqueous medium which forms the aqueous phase, typically by use of surface active compounds, such as emulsifiers and/or protective colloids, and polymerizing this system using at least one initiator which decays by formation of radicals and thereby initiates the chain growth addition polymerization of the ethylenically unsaturated monomers M. It will be appreciated here that the process shall, for the purposes of the present specification, also encompass the seed, staged, one-shot, and gradient regimes which are familiar to the skilled person.

The free-radically initiated aqueous emulsion polymerization is triggered by means of a free-radical polymerization initiator (free-radical initiator). These may, in principle, be peroxides or azo compounds. Of course, redox initiator systems are also useful. Peroxides used may, in principle, be inorganic peroxides such as hydrogen peroxide or peroxodisulfates such as the mono- or di-alkali metal or ammonium salts of peroxodisulfuric acid, for example the mono- and disodium, -potassium or ammonium salts, or organic peroxides such as alkyl hydroperoxides, for example tert-butyl hydroperoxide, p-menthyl hydroperoxide or cumyl hydroperoxide and also dialkyl or diaryl peroxides such as di-tert-butyl or di-cumyl peroxide. Azo compounds used are essentially 2,2'-azobis(isobutyronitrile), 2,2'-azobis(2,4-dimethylvaleronitrile) and 2,2'-azobis(amidinopropyl) dihydrochloride (AIBA, corresponds to V-50 from Wako Chemicals). Suitable oxidizing agents for redox initiator systems are essentially the peroxides specified above. Corresponding reducing agents which may be used are sulfur compounds with a low oxidation state such as alkali metal sulfites, for example potassium and/or sodium sulfite, alkali metal hydrogensulfites, for example potassium and/or sodium hydrogensulfite, alkali metal metabisulfites, for example potassium and/or sodium metabisulfite, formaldehydesulfoxylates, for example potassium and/or sodium formaldehydesulfoxylate, alkali metal salts, specifically potassium and/or sodium salts of aliphatic sulfinic acids and alkali metal hydrogensulfides, for example potassium and/or sodium hydrogensulfide, salts of polyvalent metals, such as iron(II) sulfate, iron(II) ammonium sulfate, iron(II) phosphate, ene diols such as dihydroxymaleic acid, benzoin and/or ascorbic acid, and reducing saccharides such as sorbose, glucose, fructose and/or dihydroxyacetone.

Preferred free-radical initiators are inorganic peroxides, especially peroxodisulfates.

In general, the amount of the free-radical initiator used, based on the total amount of monomers M, is 0.05 to 2 pphm, preferably 0.1 to 1 pphm, based on the total amount of monomers M.

The amount of free-radical initiator required for the emulsion polymerization of monomers M can be initially charged in the polymerization vessel completely. However, it is also possible to charge none of or merely a portion of the free-radical initiator, for example not more than 30% by weight, especially not more than 20% by weight, based on the total amount of the free-radical initiator and then to add any remaining amount of free-radical initiator to the free-radical polymerization reaction under polymerization conditions. Preferably, at least 70%, in particular at least 80%, especially at least 90% or the total amount of the polymerization initiator are added to the free-radical polymerization reaction under polymerization conditions. Addition may be done according to the consumption, batchwise in one or more portions or continuously with constant or varying flow rates during the free-radical emulsion polymerization of the monomers M.

Generally, the term "polymerization conditions" is understood to mean those temperatures and pressures under which the free-radically initiated aqueous emulsion polymerization proceeds at sufficient polymerization rate. They depend particularly on the free-radical initiator used. Advantageously, the type and amount of the free-radical initiator, polymerization temperature and polymerization pressure are selected, such that a sufficient amount of initiating radicals is always present to initiate or to maintain the polymerization reaction.

Preferably, the radical emulsion polymerization of the monomers M is performed by a so-called feed process (also termed monomer feed method), which means that at least 80%, in particular at least 90% or the total amount of the monomers M to be polymerized are metered to the polymerization reaction under polymerization conditions during a metering period P. Addition may be done in portions and preferably continuously with constant or varying feed rate. The duration of the period P may depend from the production equipment and may vary from e.g. 20 minutes to 12 h. Frequently, the duration of the period P will be in the range from 0.5 h to 8 h, especially from 1 h to 6 h. In a multistep emulsion polymerization step, the total duration of all steps is typically in the above ranges. The duration of the individual steps is typically shorter.

The aqueous radical emulsion polymerization is usually performed in the presence of one or more suitable surfactants. These surfactants typically comprise emulsifiers and provide micelles, in which the polymerization occurs and which serve to stabilize the monomer droplets during aqueous emulsion polymerization and also growing polymer particles. The surfactants used in the emulsion polymerization are usually not separated from the polymer dispersion, but remain in the aqueous polymer dispersion obtainable by the emulsion polymerization of the monomers M.

The surfactant may be selected from emulsifiers and protective colloids. Protective colloids, as opposed to emulsifiers, are understood to mean polymeric compounds having molecular weights above 2000 Daltons, whereas emulsifiers typically have lower molecular weights. The surfactants may be anionic or nonionic or mixtures of non-ionic and anionic surfactants.

Anionic surfactants usually bear at least one anionic group which is typically selected from phosphate, phosphonate, sulfate and sulfonate groups. The anionic surfactants which bear at least one anionic group are typically used in the form of their alkali metal salts, especially of their sodium salts or in the form of their ammonium salts.

Preferred anionic surfactants are anionic emulsifiers, in particular those which bear at least one sulfate or sulfonate group. Likewise, anionic emulsifiers which bear at least one phosphate or phosphonate group may be used, either as sole anionic emulsifiers or in combination with one or more anionic emulsifiers which bear at least one sulfate or sulfonate group.

Examples of anionic emulsifiers which bear at least one sulfate or sulfonate group, are, for example,

- the salts, especially the alkali metal and ammonium salts, of alkyl sulfates, especially of $C_8$-$C_{22}$-alkyl sulfates,

- the salts, especially the alkali metal and ammonium salts, of sulfuric monoesters of ethoxylated alkanols, especially of sulfuric monoesters of ethoxylated $C_8$-$C_{22}$-alkanols, preferably having an ethoxylation level (EO level) in the range from 2 to 40,

- the salts, especially the alkali metal and ammonium salts, of sulfuric monoesters of ethoxylated alkylphenols, especially of sulfuric monoesters of ethoxylated $C_4$-$C_{18}$-alkylphenols (EO level preferably 3 to 40),

- the salts, especially the alkali metal and ammonium salts, of alkylsulfonic acids, especially of $C_8$-$C_{22}$-alkylsulfonic acids,

- the salts, especially the alkali metal and ammonium salts, of dialkyl esters, especially di-$C_4$-$C_{18}$-alkyl esters of sulfosuccinic acid,

- the salts, especially the alkali metal and ammonium salts, of alkylbenzenesulfonic acids, especially of $C_4$-$C_{22}$-alkyl-

benzenesulfonic acids, and

- the salts, especially the alkali metal and ammonium salts, of mono- or disulfonated, alkyl-substituted diphenyl ethers, for example of bis(phenylsulfonic acid) ethers bearing a $C_4$-$C_{24}$-alkyl group on one or both aromatic rings. The latter are common knowledge, for example from US-A-4,269,749, and are commercially available, for example as Dowfax® 2A1 (Dow Chemical Company).

Also suitable are mixtures of the aforementioned salts.

Examples of anionic emulsifiers which bear a phosphate or phosphonate group, include, but are not limited to the following salts are selected from the following groups:

- the salts, especially the alkali metal and ammonium salts, of mono- and dialkyl phosphates, especially $C_8$-$C_{22}$-alkyl phosphates,

- the salts, especially the alkali metal and ammonium salts, of phosphoric monoesters of $C_2$-$C_3$-alkoxylated alkanols, preferably having an alkoxylation level in the range from 2 to 40, especially in the range from 3 to 30, for example phosphoric monoesters of ethoxylated $C_8$-$C_{22}$-alkanols, preferably having an ethoxylation level (EO level) in the range from 2 to 40, phosphoric monoesters of propoxylated $C_8$-$C_{22}$-alkanols, preferably having a propoxylation level (PO level) in the range from 2 to 40, and phosphoric monoesters of ethoxylated-co-propoxylated $C_8$-$C_{22}$-alkanols, preferably having an ethoxylation level (EO level) in the range from 1 to 20 and a propoxylation level of 1 to 20,

- the salts, especially the alkali metal and ammonium salts, of phosphoric monoesters of ethoxylated alkylphenols, especially phosphoric monoesters of ethoxylated $C_4$-$C_{18}$-alkylphenols (EO level preferably 3 to 40),

- the salts, especially the alkali metal and ammonium salts, of alkylphosphonic acids, especially $C_8$-$C_{22}$-alkylphosphonic acids and

- the salts, especially the alkali metal and ammonium salts, of alkylbenzenephosphonic acids, especially $C_4$-$C_{22}$-alkylbenzenephosphonic acids.

Further suitable anionic surfactants can be found in Houben-Weyl, Methoden der organischen Chemie [Methods of Organic Chemistry], volume XIV/1, Makromolekulare Stoffe [Macromolecular Substances], Georg-Thieme-Verlag, Stuttgart, 1961, p. 192-208.

Preferably, the surfactant comprises at least one anionic emulsifier which bears at least one sulfate or sulfonate group. The at least one anionic emulsifier which bears at least one sulfate or sulfonate group, may be the sole type of anionic emulsifiers. However, mixtures of at least one anionic emulsifier which bears at least one sulfate or sulfonate group and at least one anionic emulsifier which bears at least one phosphate or phosphonate group may also be used. In such mixtures, the amount of the at least one anionic emulsifier which bears at least one sulfate or sulfonate group is preferably at least 50% by weight, based on the total weight of anionic surfactants used in the process of the present invention. In particular, the amount of anionic emulsifiers which bear at least one phosphate or phosphonate group does not exceed 20% by weight, based on the total weight of anionic surfactants used in the process of the present invention.

Preferred anionic surfactants are anionic emulsifiers which are selected from the following groups, including mixtures thereof:

- the salts, especially the alkali metal and ammonium salts, of alkyl sulfates, especially of $C_8$-$C_{22}$-alkyl sulfates,

- the salts, especially the alkali metal salts, of sulfuric monoesters of ethoxylated alkanols, especially of sulfuric monoesters of ethoxylated $C_8$-$C_{22}$-alkanols, preferably having an ethoxylation level (EO level) in the range from 2 to 40,

- of sulfuric monoesters of ethoxylated alkylphenols, especially of sulfuric monoesters of ethoxylated $C_4$-$C_{18}$-alkylphenols (EO level preferably 3 to 40),

- of alkylbenzenesulfonic acids, especially of $C_4$-$C_{22}$-alkylbenzenesulfonic acids, and

- of mono- or disulfonated, alkyl-substituted diphenyl ethers, for example of bis(phenylsulfonic acid) ethers bearing a $C_4$-$C_{24}$-alkyl group on one or both aromatic rings.

Particular preference is given to anionic emulsifiers which are selected from the following groups including mixtures thereof:

- the salts, especially the alkali metal and ammonium salts, of alkyl sulfates, especially of $C_8$-$C_{22}$-alkyl sulfates,

- the salts, especially the alkali metal salts, of sulfuric monoesters of ethoxylated alkanols, especially of sulfuric monoesters of ethoxylated $C_8$-$C_{22}$-alkanols, preferably having an ethoxylation level (EO level) in the range from 2 to 40,

- of mono- or disulfonated, alkyl-substituted diphenyl ethers, for example of bis(phenylsulfonic acid) ethers bearing a $C_4$-$C_{24}$-alkyl group on one or both aromatic rings.

As well as the aforementioned anionic surfactants, the surfactant may also comprise one or more nonionic surface-active substances which are especially selected from nonionic emulsifiers. Suitable nonionic emulsifiers are e.g. araliphatic or aliphatic nonionic emulsifiers, for example ethoxylated mono-, di- and trialkylphenols (EO level: 3 to 50, alkyl radical: $C_4$-$C_{10}$), ethoxylates of long-chain alcohols (EO level: 3 to 100, alkyl radical: $C_8$-$C_{36}$), and polyethylene oxide/polypropylene oxide homo- and copolymers. These may comprise the alkylene oxide units copolymerized in random distribution or in the form of blocks. Very suitable examples are the EO/PO block copolymers. Preference is given to ethoxylates of long-chain alkanols, in particular to those, where the alkyl radical $C_8$-$C_{30}$ having a mean ethoxylation level of 5 to 100 and, among these, particular preference to those having a linear $C_{12}$-$C_{20}$ alkyl radical and a mean ethoxylation level of 10 to 50 and also to ethoxylated monoalkylphenols.

The surfactants used in the process of the present invention will usually comprise not more than 30% by weight, especially not more than 20% by weight, of nonionic surfactants based on the total amount of surfactants used in the process of the present invention and especially do not comprise any nonionic surfactant. Combinations of at least one anionic surfactant and at least non-ionic surfactant may also be used. In this case, the weight ratio of the total amount of anionic surfactant to the total amount of non-ionic surfactant is in the range of 99:1 to 70:30, in particular 98:2 to 75:25, especially in the range 95:5 to 80:20.

Preferably, the surfactant will be used in such an amount that the amount of surfactant is in the range from 0.2 to 5% by weight, especially in the range from 0.3 to 4.5% by weight, based on the monomers M to be polymerized. In a multistep emulsion step emulsion polymerization, the surfactant will be used in such an amount that the amount of surfactant is usually in the range from 0.2 to 5% by weight, especially in the range from 0.3 to 4.5% by weight, based on the total amount of monomers polymerized in the respective steps.

Preferably, the major portion, i.e. at least 80% of the surfactant used, is added to the emulsion polymerization in parallel to the addition of the monomers. In particular, the monomers are added as an aqueous emulsion to the polymerization reaction which contains at least 80% of the surfactant used in the emulsion polymerization.

It has been found advantageous to perform the free-radical emulsion polymerization of the monomers M in the presence of a seed latex. A seed latex is a polymer latex which is present in the aqueous polymerization medium before the polymerization of monomers M is started. The seed latex may help to better adjust the particle size or the final polymer latex obtained in the free-radical emulsion polymerization of the invention.

Principally, every polymer latex may serve as a seed latex. For the purpose of the invention, preference is given to seed latices, where the particle size of the polymer particles is comparatively small. In particular, the Z average particle diameter of the polymer particles of the seed latex, as determined by dynamic light scattering (DLS) at 20°C (see below), is preferably in the range from 10 to 80 nm, in particular from 10 to 50 nm. Preferably, the polymer particles of the seed latex is made of ethylenically unsaturated monomers which comprise at least 95% by weight, based on the total weight of the monomers forming the seed latex, of one or more monomers selected from the group consisting of $C_1$-$C_4$-alkyl methacrylates such as methyl methacrylate, monomers Mb as defined above such as acrylonitrile and monomers Mc as defined above such as styrene and mixtures thereof.

For this, the seed latex is usually charged into the polymerization vessel before the polymerization of the monomers M is started. In particular, the seed latex is charged into the polymerization vessel followed by establishing the polymerization conditions, e.g. by heating the mixture to polymerization temperature. It may be beneficial to charge at least a portion of the free-radical initiator into the polymerization vessel before the addition of the monomers M is started. However, it is also possible to add the monomers M and the free-radical polymerization initiator in parallel to the polymerization vessel.

The amount of seed latex, calculated as solids, may frequently be in the range from 0.05 to 5% by weight, in particular from 0.05 to 3% by weight, based on the total weight of the monomers in the monomer composition M to be polymerized.

The free-radical aqueous emulsion polymerization of the invention can be carried out at temperatures in the range from 0 to 170°C. Temperatures employed are generally in the range from 50 to 120°C, frequently 60 to 120°C and often 70 to 110°C. The free-radical aqueous emulsion polymerization of the invention can be conducted at a pressure of less than, equal to or greater than 1 atm (atmospheric pressure), and so the polymerization temperature may exceed 100°C and may be up to 170°C. Polymerization of the monomers is normally performed at ambient pressure, but it may also be performed under elevated pressure. In this case, the pressure may assume values of 1.2, 1.5, 2, 5, 10, 15 bar (absolute) or even higher values. If emulsion polymerizations are conducted under reduced pressure, pressures of 950 mbar, frequently of 900 mbar and often 850 mbar (absolute) are established. Advantageously, the free-radical aqueous emulsion polymerization of the invention is conducted at ambient pressure (about 1 atm) with exclusion of oxygen, for example under an inert gas atmosphere, for example under nitrogen or argon.

It is frequently advantageous, when the aqueous polymer dispersion obtained on completion of polymerization of the monomers M is subjected to an after-treatment to reduce the residual monomer content. This after-treatment is effected either chemically, for example by completing the polymerization reaction using a more effective free-radical initiator system (known as post-polymerization), and/or physically, for example by stripping the aqueous polymer dispersion with steam or inert gas. Corresponding chemical and physical methods are familiar to those skilled in the art - see, for example, EP-A 771328, DE-A 19624299, DE-A 19621027, DE-A 19741184, DE-A 19741187, DE-A 19805122, DE-A 19828183, DE-A 19839199, DE-A 19840586 and DE-A 19847115. The combination of chemical and physical after-treatment has the advantage that it removes not only the unconverted ethylenically unsaturated monomers, but also other disruptive volatile organic constituents (VOCs) from the aqueous polymer dispersion.

As the polymer contained in the aqueous polymer dispersion contains acidic groups from the monomers M4 and optionally from the polymerization initiator, the aqueous polymer dispersion obtained by the process of the invention is frequently neutralized prior to formulating it as a coating composition. The neutralization of acid groups of the polymer is achieved by neutralizing agents known to the skilled of the art after polymerization and/or during the polymerization. For example, the neutralizing agent may be added in a joint feed with the monomers to be polymerized or in a separate feed. Suitable neutralizing agents include organic amines, alkali hydroxides, ammonium hydroxides. In particular, neutralization is achieved by using ammonia or alkali hydroxides such as sodium hydroxide or potassium hydroxide.

As mentioned above, the aqueous polymer dispersion of the present invention is particularly useful as a polymer binder in coating compositions, especially in adhesive/binder in aqueous adhesive formulations.

A coating composition is a composition that is coated onto substrate in the wet state and physically dried under evaporation of water and optionally/or solvent to a specific solid content and used afterwards for e.g. decorative or functional requirements. Non-limiting examples are (flooring) adhesives, sealants, decorative paints, insulation coatings, corrosion protection coatings, water-proofing coatings and vibration dampening coatings.

The aqueous polymer dispersion of the present invention is particularly useful as a polymer adhesive/binder in aqueous flooring adhesive formulations.

Floor covering adhesives are adhesive formulations that are suitable for large-area bonding of floor coverings, especially floor coverings made of non-mineral materials. The term non-mineral means that the material does not essentially consist of mineral material, but contains non-mineral material in an amount of at least floor coverings of non-mineral materials comprising parquet, laminate including wooden laminate, plastic laminate such, as vinyl laminate, and laminate of stone plastic composite (spc laminate), carpet, plastic coverings, including vinyl coverings, PVC coverings and linoleum coverings, cork coverings and the like.

The adhesive formulations of the invention comprise a polymer dispersion of the invention and may consist solely of this dispersion. Typically, the adhesive formulations contains the polymer dispersion in an amount of 10 to 60% by weight, based on the total weight of the adhesive formulation, or 10 to 40% by weight of the polymer of the aqueous polymer dispersion, based on the total weight of the adhesive formulation.

Adhesive formulations having a pH of at least pH 10, in particular in the range of pH 10.5 to pH 11.5 will preferably also contain a pH buffering agent for maintaining a pH of the formulation of least pH 10, in particular in the range of pH 10.5 to pH 11.5.

Typical buffering agents include, but are not limited to

- alkalimetal orthosilicates such as sodium orthosilicate or potassium orthosilicate,

- alkalimetal siliconates, in particular alkalimetal methylsiliconates such as sodium methylsiliconate or potassium siliconates,

- alkanolamines such as 2-aminoethanol, 2-amino-2-methylpropanol, 2-(n-butylamino)ethanol, 2-(dimethylamino)-2-methylpropanol, N,N-dimethylglucamin and mixtures thereof;

- alkalimetal phosphates, in particular alkalimetal orthophosphates such as trisodium phosphate or tripotassium phosphate;

- alkalimetal monohydrogenphosphates,

- aminoacids such as lysine, histidine and arginine, with preference given to lysine.

Amongst the aforementioned buffers, preference is given to alkalimetal orthosilicates and alkalimetal siliconates and combinations thereof.

The amount of buffer is chosen to maintain the pH in the desired range and, if present, is typically in the range of 0.5 to 5% by weight, based on the total weight of the adhesive formulation.

The adhesive formulations having a pH of at least pH 10, in particular in the range of pH 10.5 to pH 11.5 may also contain a non-buffering base for adjusting the pH, e.g. an alkalimetal hydroxide such as sodium hydroxide or potassium hydroxide.

Besides the polymer dispersion, the buffering agent and the optional base, the formulation may also comprise further ingredients of the kind customary in adhesives based on aqueous polymer dispersions. These include fillers, colorants, including pigments, thickeners, tackifiers (tackifying resins) and optionally further additives.

The formulation of the invention may further comprise one or more tackifiers. If present, the amount of tackifier is preferably in the range of 5 to 30% by weight, based on the total weight of the adhesive formulation. However, it is also possible that the formulations do not contain any tackifier or contain tackifier in an amount of less than 5% by weight, based on the total weight of the adhesive formulation. The formulations of the invention may also contain a combination of one or more tackifiers and one or more plasticizers, in particular, if the tackifier has a high melting point. However, the amount of plasticizers is preferably not more than 30% by weight, based on the total weight of the combination of tackifier and plasticizer. The total amount of polymer of the polymer dispersion, the tackifier and the optional plasticizer will typically not exceed 55% by weight and thus is in the range of 10 to 55% by weight, in particular 20 to 55% by weight, based on the total weight of the adhesive formulation.

A tackifier is a polymeric or oligomeric additive for adhesive polymers or generally for elastomers which increases their autoadhesion (tack, inherent tack, self-adhesion) so that after short, light contact pressure they adhere to surfaces firmly. Tackifiers include for example natural resins, such as colophony resins and the derivatives thereof formed by disproportionation or isomerization, polymerization, dimerization or hydrogenation or terpene resins. These may be in their salt form (with for example monovalent or polyvalent counterions (cations)) or preferably in their esterified form. Alcohols used for esterification may be monohydric or polyhydric. Examples include methanol, ethanediol, diethylene glycol, triethylene glycol, 1,2,3-propanethiol, pentaerythritol. Further employable tackifying resins are hydrocarbon resins, for example coumaroneindene resins, polyterpene resins, hydrocarbon resins based on unsaturated CH compounds, such as butadiene, pentene, methylbutene, isoprene, piperylene, divinylmethane, pentadiene, cyclopentene, cyclopentadiene, cyclohexadiene, styrene, alpha-methylstyrene, vinyltoluene. Tackifiers are known for example from Adhesive Age, July 1987, pages 19-23 or Polym. Mater. Sci. Eng. 61 (1989), pages 588-592.

Polyacrylates having a low molar weight can also be used as tackifiers. These polyacrylates preferably have a weight-average molecular weight $M_w$ less than 50 000, in particular less than 30 000. The tackifying polyacrylates preferably consist to an extent of at least 60% by weight, in particular at least 80% by weight, of $C_1$-$C_8$ alkyl (meth)acrylates. Suitable tackifiers include for example the low-molecular-weight polymers and oligomers described in WO 2013/117428 having a weight-average molecular weight of less than 50 000 and a glass transition temperature of not less than -40°C to not more than 0°C, preferably of not less than -35°C to not more than 0°C, producible by emulsion polymerization in the presence of at least one molecular weight regulator and producible from a monomer mixture comprising at least 40% by weight of at least one C1- to C20-alkyl (meth)acrylate.

Preferred tackifiers are selected from the group consisting of natural resins, hydrocarbon resins, tackifying polyacrylates or mixtures thereof. Particularly preferred tackifiers include natural or chemically modified colophony resins. Colophony resins consist predominantly of abietic acid or abietic acid derivatives or hydrogenated derivatives thereof. The tackifiers may be added to the polymer dispersion in simple fashion. The tackifiers themselves are preferably added in the form of an resin melt which is added to the dispersion or to the formulation after heating to a temperature at which the viscosity is low enough to guarantee a homogenous mixing. Tackifiers may also be added as aqueous tackifier dispersions. The amount by weight of the tackifiers is preferably 5 to 80 parts by weight, particularly preferably, 5 to 50, 5 to 40, or 10 to 40 parts by weight, based on 100 parts by weight of polymer (solid/solid). Most preferred are tackifiers of biological origin such as natural resins, including chemically modified natural resins-

The adhesive formulation of the invention preferably further comprises at least one filler. The amount of filler is typically in the range of 25 to 50 wt%, in particular in the range of 35 to 45 wt%, based on the total amount of the formulation.

Suitable fillers are, for example, aluminosilicates such as feldspars, silicates such as kaolin, talc, mica, magnesite, alkaline earth metal carbonates such as calcium carbonate in the form of calcite or chalk, for example, magnesium carbonate, dolomite, alkaline earth metal sulfates such as calcium sulfate, silicon dioxide, etc. In dispersions, finely divided fillers are of course preferred. The fillers may be used as individual components. In practice, however, filler mixtures have been found particularly appropriate, examples being calcium carbonate/kaolin and calcium carbonate/talc. Calcium carbonate is used with particular preference as a filler.

The filler in the formulation of the invention is preferably calcium carbonate with an average particle diameter of 2 to 50 μm or a finely ground quartz having an average particle diameter of 3 to 50 μm or a combination of the two substances. The average particle diameter may be determined by means of light scattering techniques, for example. Examples of calcium carbonate are chalk, limestone, or calcite marble.

The adhesive formulations of the present invention may contain one or more of the following conventional additives: emulsifiers, pigment dispersants, defoamers, thickeners and wetting agents.

Typically one or more of these auxiliaries are present in the adhesive formulations in the following amounts, based in each case on the total weight of the formulation:

Emulsifiers: 0.1 to 3 wt%;
Defoamers: 0.05 to 0.4 wt%;
Pigment dispersant: 0.1 to 2 wt%;
Thickener: 0.001 to 1 wt%; and
Wetting agents: 0.1 to 0.8 wt%,

where the amounts given here refer to the active components.

Preferred emulsifiers have been stated above in the context of the emulsion polymerization of the monomers M.

Suitable defoamers are based, for example, on modified alcohols and polysiloxane adducts. Suitable wetting agents are based, for example, on ethoxylated fatty acids.

Examples of preferred defoamers are mineral oil and silicone oil defoamers and oxyalkylated compounds such as Agitan® 282, Agitan® E255, Byk® 93, FoamStar® PB 2706, or FoamStar® S! 2210, for example.

Preferred pigment dispersants are, for example, polymers based on carboxylic acids such as, for example, Dispex® AA 4135, Dispex® CX 4320, Dispex® AA 4140, or Dispex® AA 4040.

Preferred thickeners are based, for example, on anionic polyacrylate copolymers (such as Rheovis® AS 1125, for example), on polyurethanes (such as Rheovis® PU 1190, for example), or on cellulose derivatives.

Preferred wetting agents are based, for example, on ethoxylated fatty acids such as, for example, Hydropalat® WE 3185, or on sodium salts of sulfosuccinates such as Hydropalat ®WE 3450, for example.

All embodiments and preferred embodiments set out above are freely combinable with one another, unless the context clearly rules out such combination.

The invention is elucidated in more detail by the examples hereinafter.

EXAMPLES

Hereinafter the following abbreviations were used:

| | |
|---|---|
| 2-OA | 2-octyl acrylate |
| AA | acrylic acid |
| AN | acrylonitrile |
| DV | dynamic viscosity |
| EA | ethyl acrylate |
| EHA | 2-ethylhexyl acrylate |
| EO | ethylene oxide |
| iBA | *iso*-butyl acrylate |
| nBA | *n*-butyl arylate |
| rpm | revolutions per minute |
| S.C. | solids content |

If not stated otherwise, the water used was deionized water.

1. Analytics and characterization

1.1 Characterization of the dispersions

i) Solids contents of the polymer dispersions were measured according to the standard method DIN EN ISO 3251:

2008-06.

ii) pH values of the polymer dispersions were measured according to the standard method DIN ISO 976:2016-12.

iii) Particle Size Distribution of Polymer Dispersion by DLS

The particle diameter of the polymer latex was determined by dynamic light scattering (also termed quasielastic light scattering) of an aqueous polymer dispersion diluted with deionized water to 0.001 to 0.5% by weight at 22°C by means of a HPPS from Malvern Instruments, England. What is reported is the cumulant Z average diameter calculated from the measured autocorrelation function (ISO Standard 13321). The polydispersity index was calculated from a simple 2 parameter fit to the correlation data (the cumulants analysis).

iv) Particle Size Distribution of Polymer Dispersion by HDC

Measurements were carried out using a PL-PSDA particle size distribution analyzer (Polymer Laboratories, Inc.). A small amount of sample of the polymer latex was injected into an aqueous eluent containing an emulsifier, resulting in a concentration of approximately 0.5 g/l. The mixture was pumped through a glass capillary tube of approximately 15 mm diameter packed with polystyrene spheres. As determined by their hydrodynamic diameter, smaller particles can sterically access regions of slower flow in capillaries, such that on average the smaller particles experience slower elution flow. The fractionation was finally monitored using an UV-detector which measured the extinction at a fixed wavelength of 254 nm.

v) Measurement of hydrolysis

The dispersion was mixed with 5% b.w. of an aqueous solution of potassium silicate, and the pH of the mixture was adjusted to 11.3 by slowly adding a 5% b.w. an aqueous solution of potassium hydroxide. The mixture was stored at 50°C for 14 days. Afterwards, the mixture was analyzed by GC. The content of free alcohols which could be evolved by hydrolysis of the respective ester groups in the monomers or polymer is compared with the GC measurement of the pure dispersion. The amount is given in % with respect to theoretical value of complete hydrolysis.

1.2. Application testing of the adhesive formulations

vi) Measurement of viscosity

The viscosity was measured according to the standard method DIN EN ISO 2555:2018-9 using a Brookfield viscometer DV1 with spindle 6 (equal or less than 50 000 mPas) or spindle 7 (more than 50 000 mPas) at 20 revolutions per minutes and Room Temperature (23,5°C), time of test: 60 seconds. The viscosity was measured immediately after preparation of the formulation. Values are given in mPas.

vii) Measurement of dynamic shear strength (EN ISO 22632) and

viii) Measurement of peel strength according to EN ISO 22631 (PVC Peel Testing)

The formulation is applied as an adhesive with serrated strip TKB A2 to fiber cement slabs (e.g., Eternit® 2000, $150 \times 50 \times 8$ mm) in peel direction. PVC strips (Tarkett standard; $200 \times 50 \times 2$ mm) are laid into the bed of adhesive after venting times of 5 min and 15 min, respectively, and pressed on with a 3.5 kg roller by rolling back and forth one time. After a storage time of 14 days specified under standard climatic conditions (1 bar, 23.5°C, 50% r.h.), the peel strength (in N/mm) or the shear strength (in N/mm²) was tested in a tensile tester at a peeling rate of 100 mm/min.

ix) Parquet Bonding was measured according to DIN 281: Blocks of oak were coated with the adhesive (coater: serrated strip TKB B3)) and adhesive-bonded overlapping one another (adhesive-bonded surface $26 \times 23$ mm) and pressed on with a 2 kilo weight for 1 minute. After the storage time specified under standard climatic conditions (1 bar, 23.5°C, 50% r.h.), the shear strength (in N/mm²) was tested in a tensile tester.

2. Materials used for preparing the polymer dispersions

- Seed latex S1: Polystyrene seed latex having a solid content of 33% by weight and a volume average particle diameter of 31 nm - Emulsifier E1: 32% b.w. aqueous solution of a fatty alcohol polyethylene glycol ether sulphate, sodium salt (Disponil® FES 77)
- Emulsifier E2: 20% b.w. aqueous solution of an ethoxylated C16/C18 alcohol having 18 EO units (Lutensol ®AT18)
- Defoaming agent D1: Agitan® LF 305, available from Münzig

3. Production of the polymer dispersions

Example 1:

Polymer dispersions were synthesized via semi-continuous emulsion polymerization according to the following protocol:
A polymerization reactor equipped with a stirrer, a dosage module, a temperature control module and a reflux condenser was charged at room temperature with 258.36 g water, 2.91 g polysyrene seed latex (33 wt% in water, 32 nm particle size) and 5.27 g ascorbic acid (9.1 wt.% in water). The reactor was flushed with nitrogen and heated to 85 °C under stiring with 150 rpm. After reaching the temperature of 85 °C, 10% of feed #1 was fed into the reaction vessel in the course of 2 minutes and incorporated by stirring at 85 °C over 3 minutes. Subsequently, the remaining of feed #1 as well as feed #2 were started simultaneously and added in the following manner while maintaining the aforementioned temperature:
a.) feed #1: 53.64% of the remaining feed #1 was added over 2 h 15 min, then the remaining feed #1 (36.36%) within 1 h. b.) Feed #2 was added using the following dosing profile: 1.16% in 7 min, 2.31% in 8 min, 3.47% in 7 min, 4.62% in 8 min, 78.73% in 2 h 17 min, 1.5% in 3 min, 0.75% in 2 min und 7.46% in 23 min.

feed #1

97.71 g sodium persulfate (7 wt.% in water)

feed #2 (emulsion):

| | |
|---|---|
| 251.23 g | water |
| 131.25 g | E1 |
| 30.00 g | E2 |
| 30.00 g | acrylic acid |
| 120.00 g | acrylonitrile |
| 360.00 g | ethyl acrylate |
| 600.00 g | ethyl hexyl acylate |
| 90.00 g | n-butyl acrylate |
| 23.04 g | NaOH (25 wt.% in water) |

Then 22.44 g of water was added to the reactor and the reaction mixture was stirred for 30 min at 85 °C, then 41.57 g of water was added again.
For chemical deodorization the following two mixtures were added as two separate feeds at a constant feed rate over 2h: a) 46.84 g tert-butyl hydroperoxide (10% in water), b) 45.25 g sodium acetone bisulfite (13.1% in water) and 2.28 g of water. After 30 min, the temperature was continuously lowered to 70 °C within 15 min and then held at this temperature, with a light stream of nitrogen being passed through the apparatus and a connected cold trap with dry ice. Then, 26.40 g of a 10% aqueous ammonia solution was added within 30 min followed by 18.75 g of E1 within 15 min and 126.34 g of water. The dispersion was cooled to room temperature and filtered. The properties of the dispersion of example 1 are summarized in table 2.

Example 2:

Polymer dispersions were synthesized via semi-continuous emulsion polymerization according to the following protocol:
A polymerization reactor equipped with a stirrer, a dosage module, a temperature control module and a reflux condenser was charged at room temperature with 172.24 g water, 1.94 g polysyrene seed latex (33 wt% in water, 32 nm particle size) and 3.52 g ascorbic acid (9.1 wt.% in water). The reactor was flushed with nitrogen and heated to 85 °C under stiring with 150 rpm. After reaching the temperature of 85 °C, 10% of feed #1 was fed into the reaction vessel in the course of 2 minutes and incorporated by stirring at 85 °C over 3 minutes. Subsequently, the remaining of feed #1 as well as feed #2 were started simultaneously and added in the following manner while maintaining the aforementioned temperature:

a.) feed #1: 53.64% of the remaining feed #1 was added over 2 h 15 min, then the remaining feed #1 (36.36%) within 1 h. b.) Feed #2 was added using the following dosing profile: 1.16% in 7 min, 2.31% in 8 min, 3.47% in 7 min, 4.62% in 8 min, 78.73% in 2 h 17 min, 1.5% in 3 min, 0.75% in 2 min und 7.46% in 23 min.

feed #1

65.14 g sodium persulfate (7 wt.% in water)

feed #2 (emulsion):

| | |
|---|---|
| 167.49 g | water |
| 87.50 g | E1 |
| 20.00 g | E2 |
| 20.00 g | acrylic acid |
| 96.00 g | acrylonitrile |
| 240.00 g | 2-octylacylate |
| 444.00 g | n-butyl acrylate |
| 15.36 g | NaOH (25 wt.% in water) |

Then 14.96 g of water was added to the reactor and the reaction mixture was stirred for 30 min at 85 °C, then 27.71 g of water was added again.

For chemical deodorization the following two mixtures were added as two separate feeds at a constant feed rate over 2h: a) 31.20 g tert-butyl hydroperoxide (10% in water), b) 30.17 g sodium acetone bisulfite (13.1% in water) and 1.52 g of water. After 30 min, the temperature was continuously lowered to 70 °C within 15 min and then held at this temperature, with a light stream of nitrogen being passed through the apparatus and a connected cold trap with dry ice. Then, 17.60 g of a 10% aqueous ammonia solution was added within 30 min followed by 12.50 g of E1 within 15 min and 84.23 g of water. The dispersion was cooled to room temperature and filtered. The properties of the dispersion of example 1 are summarized in table 2.

Example 3 - 9:

The dispersions were prepared by analogy to the protocol of example 2 but the feed #2 contained the monomers acrylic acid (AA), acrylonitrile (AN), n-butyl acrylate (nBA), ethyl acrylate (EA), ethyl hexyl acrylate (EHA), 2-octyl acrylate (2-OA) and iso-butylacrylate (iBA) in the amounts summarized in table 1. The amounts are given in parts by weight. The properties of the dispersion of example 3 - 9 are summarized in table 2.

Comparative examples V1:

The comparative dispersion V1 was prepared by analogy to the protocol of example 1, but the feed #2 contained the monomers acrylic acid, acrylonitrile and n-butyl acrylate in the amounts summarized in table 1. The amounts are given in parts by weight. The properties of the dispersion of comparative example V1 are also summarized in table 2.

Table 1: The Monomer composition of the dispersions 1 - 9 and V1:

| Example | AA [g] | AN [g] | nBA [g] | EA [g] | EHA [g] | 2-OA [g] | iBA [g] |
|---|---|---|---|---|---|---|---|
| 1 | 30 | 120 | 90 | 360 | 600 | --- | |
| 2 | 20 | 96 | 444 | --- | --- | 240 | --- |
| 3 | 20 | 96 | 364 | --- | --- | 320 | --- |
| 4 | 20 | 96 | 284 | --- | --- | 400 | --- |
| 5 | 20 | 56 | --- | 536 | 188 | --- | --- |
| 6 | 20 | 40 | --- | --- | --- | --- | 740 |
| 7 | 20 | --- | --- | --- | --- | --- | 780 |

(continued)

| Example | AA [g] | AN [g] | nBA [g] | EA [g] | EHA [g] | 2-OA [g] | iBA [g] |
|---|---|---|---|---|---|---|---|
| 8 | 20 | 80 | --- | --- | 340 | --- | 360 |
| 9 | 20 | 48 | --- | --- | 312 | --- | 420 |
| V1 | 20 | 80 | 700 | -- | -- | | -- |

Table 2: Properties of the polymer dispersions of examples 1 - 9 and V1

| Example | SC [%] | pH | LD[1] | HPPS [nm] | DV[2] [mPa·s] | calc. $T_g$ |
|---|---|---|---|---|---|---|
| 1 | 55.4 | 6,2 | 59 | 323 | 141 | -38.7 °C |
| 2 | 54.1 | 6,4 | 57 | 323 | 138 | -37.4 °C |
| 3 | 54.8 | 6,2 | 54 | 344 | 155 | -36.6 °C |
| 4 | 55.5 | 6,7 | 55 | 348 | 176 | -35.9 °C |
| 5 | 55.4 | 6,3 | 64 | 281 | 92 | -19.0 °C |
| 6 | 56.0 | 6,0 | 55 | 320 | 72 | -15.5 °C |
| 7 | 54.3 | 6,4 | 58 | 278 | 42 | -19.9 °C |
| 8 | 53.8 | 5,6 | 51 | 335 | 106 | -35.9 °C |
| 9 | 54.3 | 5,9 | 54 | 321 | 89 | -37.0 °C |
| V1 | 55.0 | 7,1 | 54 | 318 | 120 | -41.8 °C |
| 1) The determination of the mean particle diameters is determined by the method of quasielastic light scattering (ISO standard 13 321)] 2) measured at 500 revolutions per second | | | | | | |

4. Flooring adhesive formulation

4.1 Materials used for preparing the flooring adhesive formulation:

| | |
|---|---|
| Resin 1: | gum rosin (Dercol® M10B of Dercol; Diamantino Malho & Cia. Lda) |
| Resin 2: | rosin ester (Bremasin® 1601 of Robert Kraemer GmbH) |
| Thickener: | anionic polyacrylate copolymer (Rheovis® 1125 of BASF SE) |
| Emulsifier: | sodium lauryl sulphate |
| Defoamer: | mixture of modified alcohols and a polysiloxane adduct (Foamstar® SI 2210 of BASF SE) |
| Dispersant: | sodium polyacrylate (Dispex® AA 4135 of BASF SE) |
| Wetting agent: | non-ionic wetting agent based on alcohol ethoxylate (100%) (Hydropalat® WE 3185 EL of BASF SE) |
| Filler: | Calcium carbonate with average particle size d50 of 7 μm (Omyacarb® 10 GU of Omya GmbH) |

The respective dispersion was stirred in a plastic beaker at room temperature and the following ingredients shown in Table 3 and Table 4 were added stepwise in the given sequence under stirring. The resin melt was prepared before at elevated temperature of ~ 100 °C as a 1:1 mixture of Dercol® M 10B and Breamsin® 1601 and added hot to the dispersion. Stirring speed and addition time was chosen in a way to ensure to formation of a homogenous mixture of the resulting adhesive formulation.

Table 3: Adhesive composition and formulation sequence of adhesive formulation A1 - A5 an AV1

|  | [%] | A1 | A2 | A3 | A4 | A5 | AV1 |
|---|---|---|---|---|---|---|---|
| Dispersion | 55 | 36,5 | 36,5 | 36,5 | 36,5 | 36,5 | 36,5 |
| Resin melt | 100 | 15 | 15 | 15 | 15 | 15 | 15 |
| Rheovis ®1125 | 4% | 4,9 | 2,7 | 3,1 | 3,1 | 4,3 | 6,3 |
| Disponil ®SDS 15 | 15% | 1,0 | 1,0 | 1,0 | 1,0 | 1,0 | 1,0 |
| Foamstar® SI 2210 | 100% | 0,3 | 0,3 | 0,3 | 0,3 | 0,3 | 0,3 |
| Dispex® AA 4135 | 35% | 0,5 | 0,5 | 0,5 | 0,5 | 0,5 | 0,5 |
| Hydropalat ®WE 3185 EL | 100% | 0,4 | 0,4 | 0,4 | 0,4 | 0,4 | 0,4 |
| Wasser |  | 2,4 | 3,6 | 3,2 | 3,2 | 2,0 |  |
| Omyacarb® 10GU |  | 40,0 | 40,0 | 40,0 | 40,0 | 40,0 | 40,0 |

Table 4: Adhesive composition and formulation sequence of adhesive formulation A6 - A9.

|  | [%] | A6 | A7 | A8 | A9 |
|---|---|---|---|---|---|
| Dispersion | 55 | 36,5 | 36,5 | 36,5 | 36,5 |
| Resin melt | 100 | 15 | 15 | 15 | 15 |
| Rheovis 1125 | 4% | 5,3 | 3,2 | 2,8 | 1,6 |
| Disponil ®SDS 15 | 15% | 1,0 | 1,0 | 1,0 | 1,0 |
| Foamstar® SI 2210 | 100% | 0,3 | 0,3 | 0,3 | 0,3 |
| Dispex ®AA 4135 | 35% | 0,5 | 0,5 | 0,5 | 0,5 |
| Hydropalat WE ®3185 EL | 100% | 0,4 | 0,4 | 0,4 | 0,4 |
| Wasser |  |  | 3,1 | 3,5 | 4,7 |
| Omyacarb ®10GU |  | 40, 0 | 40, 0 | 40, 0 | 40, 0 |

Adhesive tests were conducted according to or similar to EN 22631, EN 22632, DIN 281

| Test standard | Test after | Drying time |  | A1 | A2 | A3 | A4 | A5 | AV1 |
|---|---|---|---|---|---|---|---|---|---|
|  |  |  |  |  |  |  |  |  |  |
| **Dispersion film values** | 10d |  | F(max) in N/mm$^2$ | 0,19 | 0,13 | 0,13 | 0,11 | 0,24 | 0,00 |
|  |  |  | S(max) in % | 1970 | 3200 | 3100 | 3200 | 2260 | 0 |
| EN 22631 | 14 d | 5 min | N/mm | **2,24** | **2,92** | **2,56** | **2,14** | **1,81** | **2,34** |
| **PVC peel testing** |  |  | Standard deviation | 0,10 | 0,22 | 0,11 | 0,22 | 0,17 | 0,08 |
| notch geometry TKB A 2 |  |  | fracture pattern | A | A | A | A | A | A |

(continued)

| Test standard | Test after | Drying time | | A1 | A2 | A3 | A4 | A5 | AV1 |
|---|---|---|---|---|---|---|---|---|---|
| | 14 d | 15 min | N/mm | **1,21** | **1,52** | **1,53** | **1,49** | **0,79** | **1,38** |
| | | | Standard deviation | 0,08 | 0,12 | 0,15 | 0,12 | 0,05 | 0,25 |
| | | | fracture pattern | A | A | A | A | A | A |
| EN 22632 | 14 d | 5 min | max. Tension N / mm$^2$ | **0,61** | **0,51** | **0,47** | **0,49** | **0,53** | **0,54** |
| **shear testing** | | | Standard deviation | 0,02 | 0,03 | 0,03 | 0,02 | 0,03 | 0,02 |
| fiber cement / standard PVC flooring | | | fracture pattern | A | A | A | A | A | A |
| DIN 281 | 7 d | immediatelly | max. Tension N / mm$^2$ | **1,33** | **1,07** | **1,12** | **0,96** | **1,53** | **1,09** |
| **parquet bonding** | | | Standard deviation | 0,04 | 0,06 | 0,07 | 0,06 | 0,13 | 0,07 |
| shear values with oak wood lamellae | | | Slip in mm | 1,48 | 1,45 | 1,46 | 1,29 | 1,64 | 1,88 |

| Test standard | Test after | Drying time | | A6 | A7 | A8 | A9 |
|---|---|---|---|---|---|---|---|
| **Dispersion film values** | 10d | | F(max) in N/mm$^2$ | 0,25 | 0,25 | 0,22 | 0,19 |
| | | | S(max) in % | 1777 | 642 | 2606 | 1282 |
| EN 22631 | 14 d | 5 min | N / mm | **1,55** | **0,57** | **1,99** | **1,37** |
| **PVC peel testing** | | | Standard deviation | 0,08 | 0,10 | 0,10 | 0,06 |
| notch geometry TKB A 2 | | | fracture pattern | A | A | A | A |
| | 14 d | 15 min | N/mm | **0,87** | **0,38** | **1,22** | **0,84** |
| | | | Standard deviation | 0,04 | 0,04 | 0,07 | 0,06 |
| | | | fracture pattern | A | A | A | A |

(continued)

| Test standard | Test after | Drying time | | A6 | A7 | A8 | A9 |
|---|---|---|---|---|---|---|---|
| EN 22632 | 14 d | 5 min | max. Tension N / mm$^2$ | **0,52** | **0,38** | **0,57** | **0,50** |
| **shear testing** | | | Standard deviation | 0,04 | 0,03 | 0,01 | 0,02 |
| fiber cement / standard PVC flooring | | | fracture pattern | K20 | K20 | K20 | A |
| DIN 281 | 7 d | immediatelly | max. Tension N / mm$^2$ | **1,24** | **0,82** | **1,11** | **0,93** |
| **parquet bonding** | | | Standard deviation | 0,20 | 0,06 | 0,12 | 0,03 |
| shear values with oak wood lamellae | | | Slip in mm | 1,73 | 0,90 | 1,90 | 1,36 |
| Besides, the viscosity was tested via Brookfield viscosimeter and the results are depicted in Table 5. | | | | | | | |

Table 5: Viscosity of the resulting adhesive formulations

| Rheology test | Density | | A1 | A2 | A3 | A4 | A5 | AV1 |
|---|---|---|---|---|---|---|---|---|
| **Rheology test** | **Density** | in g/cm$^3$ | 1,27 | 1,26 | 1,15 | 1,15 | 1,14 | 1,23 |
| Brookfield DV1 | Viscosity, immediately | mPa·s | 29.000 | 24.000 | 24.000 | 22.000 | 23.000 | 20.000 |
| Rheovis® 1125 | | | 4,9 | 2,7 | 3,1 | 3,1 | 4,3 | 6,3 |

| Rheology test | Density | in g/cm$^3$ | A6 | A7 | A8 | A9 |
|---|---|---|---|---|---|---|
| **Rheology test** | Density | in g/cm$^3$ | A6 | A7 | A8 | A9 |
| Brookfield DV1 | Viscosity, immediately | mPa·s | 40.000 | 37.000 | 48.000 | 31.000 |
| Rheovis ®1125 | | | 5,3 | 3,2 | 2,8 | 1,6 |

It is clearly visible from Table 5 that the target viscosity of ≥ 20.000 mPa·s is obtained for Adhesive formulation A1 - A5 and A6-A9 with significant less amount of thickener than for the comparative example AV1 which was the target of this Invention. The adhesive properties are all in a sufficient range.

Claims

1. An aqueous polymer latex of a copolymer obtainable by aqueous emulsion polymerisation of ethylenically unsaturated monomers M, which comprise

- 20 to 99% by weight, based on the total amount of monomers M, comprising at least one monomer M1, which is selected from iso butyl acrylate, 2-ethyl hexyl acrylate, 2-octyl acrylate or mixtures thereof
- 0 to 70% by weight, based on the total amount of monomers M, of at least one monomer M2, which is selected from ethyl acrylate, methyl acrylate, metylmeth acrylate, n-butyl acrylate, n-pentyl acrylate, $C_6$-$C_{20}$-alkyl esters

of acrylic acid and $C_5$-$C_{20}$-alkyl esters of methacrylic acid and mixtures thereof;
- 5 to 20% by weight, based on the total weight of the monomers M, of at least one Monomer M3, which is a monoethylenically unsaturated carbonitrile;
- 0.01 to 3.0% by weight based on the total weight of the monomers M, of a monoethylenically unsaturated monomer M4 which has an acidic group such as a sulfonic, phosphonic, phosphoric or carboxylic acid group

optionally further monomers M5 different from monomers M1 to M4a where the total amount of monomers M1, M2, M3 and M4 is at least 80%, preferably 90% by weight, based on the total amount of ethylenically unsaturated monomers M.

2. The aqueous polymer latex of claim 1, wherein at least the carbon atoms of the alkyl group of at least one of the monomers of 2-octyl acrylate, isobutyl acrylate and ethyl acrylate is of biological origin.

3. The aqueous polymer latex of any one of the preceding claims,wherein the 2-octyl acrylate monomer (i) is made from bio-based 2-octanol and non-bio-based or bio-based acrylic acid.

4. The aqueous polymer latex of any one of the preceding claims, wherein the monomer M2 is selected from the group consisting of n-butyl acrylate, methyl acrylate, methylmeth acrylate, ethyl acrylate and mixtures thereof.

5. The aqueous polymer latex of any one of the preceding claims, wherein the monomer M3 is selected from the group consisting of acrylonitrile and methacrylonitrile.

6. The aqueous polymer latex of any one of the preceding claims, where the monomers M4 are selected from acrylic acid, methacrylic acid, itaconic acid and combinations thereof.

7. The aqueous polymer latex of any one of the preceding claims, wherein the particles of the copolymer contained in the polymer latex have an Z-average particle diameter in the range from 30 to 500 nm, in particular in the range from 40 to 350 nm, as determined by quasi-elastic light scattering.

8. The aqueous polymer latex of any one of the preceding claims, where the polymers in the aqueous polymer dispersions which are formed from the polymerized monomers M have a glass transition temperature, $T_g$ of at most 0°C, in particular at most -5°C, e.g. in the range from -60 to 0°C, in particular in the range from -50 to -5°C, especially in the range from -40 to -10°C, determined by differential scanning calorimetry as the midpoint temperature when evaluating the second heating curve at a heating rate of 20 K/min.

9. The aqueous polymer latex of any one of the preceding claims, which is obtained by a process comprising a free-radical aqueous emulsion polymerization of the monomers M.

10. The use of an aqueous polymer latex as defined in any of claims 1 to 9 as a binder in coating compositions.

11. The use of an aqueous polymer latex as defined in any of claims 1 to 9, wherein the coating composition is an adhesive composition.

12. The use of an aqueous polymer latex as defined in any one of claims 1 to 9, wherein the coating composition is a flooring adhesive.

13. The use of an aqueous polymer latex as defined in any of claims 10 to 12, wherein the thickener demand is less than 1% by weight, based on the total amount of the coating formulation.

14. A coating composition comprising

a) 10 to 99 % by weight the aqueous polymer latex of an aqueous polymer latex as defined in any one of the claims 1 to 9 as a binder, based on the total amount of the formulation, and
b) at least one further ingredient, which is conventionally used in coating compositions and which is not a binder.

15. An aqueous adhesive formulation comprising

a) 10 to 99 %by weight of an aqueous polymer latex as defined in any one of the claims 1 to 9 as a binder, based on the total amount of the formulation, and

b) at least one further ingredient, which is conventionally used in adhesive compositions and which is not a binder.

16. The aqueous adhesive formulation of claim 15, further containing 5 to 30 % by weight of a tackifier resin, based on the total amount of the formulation.

17. The aqueous adhesive formulation of any one of claims 15 or 16 further containing 25 % to 50 % by weight based on the total amount of the formulation of at least one filler.

18. The aqueous adhesive formulation of any of claims 15 to 17, further containing

- 0.1 to 3 wt% Emulsifiers or
- 0.05 to 0.4 wt% Defoamers or
- 0.1 to 2 wt% Pigment dispersant or
- 0.001 to 1 wt% Thickeneror
- 0.1 to 0.8 wt% Wetting agents or

mixtures thereof, based on the total amount of the formulation.

19. The aqueous adhesive formulation of any of claims 15 to 18, wherein the adhesive composition is a flooring adhesive.

20. A Flooring adhesive composition in the form of an aqueous polymer dispersion comprising at least one dispersed adhesive polymer latex M, formed by emulsion polymerization of

(i) from 20 to 95% by weight, based on the sum of all monomers M, of 2-octyl acrylate, iso butyl acrylate or mixtures thereof;

(ii) from 0.01 to 3% by weight, based on the sum of all monomers M, of at least one monomer having at least one acid group;

(iii) from 0 to 70% by weight, based on the sum of all monomers M, of ethyl acrylate;

(iv) from 5 to 60 % by weight, based on the sum of all monomers M n-butyl acrylate,

(v) from 0 to 60% by weight, based on the sum of all monomers M, of 2-ethylhexyl acrylate;

(vi) 5 to 28% by weight, based on the total weight of the monomers M, of at least one monoethylenically unsaturated carbonitrile

(vii) optionally further monomers different from (i) to (vi),

wherein the glass transition temperature of the polymer latex is between -60 to 0°C calculated according to Fox.

Europäisches
Patentamt

European
Patent Office

Office européen
des brevets

# EUROPEAN SEARCH REPORT

**Application Number**

EP 23 21 5925

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 429 207 A (ROHM & HAAS CO) 29 May 1991 (1991-05-29) * example 4; table 7 * | 1,4-7,9, 10,14 | INV. C08F2/22 C08F220/18 C09J133/08 |
| X | US 7 931 972 B2 (LUBRIZOL ADVANCED MAT INC [US]) 26 April 2011 (2011-04-26) * example 8; table 3 * | 1,4-10, 13,14 | |
| X | US 2012/094115 A1 (TAKEDA SHINJI [JP] ET AL) 19 April 2012 (2012-04-19) | 1,4-6, 8-12,14, 15,17,18 | |
| Y | * production example 1; paragraphs [0105], [0150]; example 1; tables 1,3 * | 1-20 | |
| Y | JP 2002 285122 A (SAIDEN CHEMICAL IND CO LTD) 3 October 2002 (2002-10-03) * manufacture example 1 * | 1-20 | |
| Y | US 2019/367644 A1 (NABUURS TIJS [NL] ET AL) 5 December 2019 (2019-12-05) * paragraph [0013] * | 2,3 | TECHNICAL FIELDS SEARCHED (IPC) |
| Y | EP 3 013 767 A1 (ARKEMA FRANCE [FR]) 4 May 2016 (2016-05-04) * claim 1 * | 2,3 | C04B C09D C09J C08F |
| Y,D | WO 2022/008661 A1 (BASF SE [DE]) 13 January 2022 (2022-01-13) * claim 27 * | 16 | |

-/--

The present search report has been drawn up for all claims

| Place of search | Date of completion of the search | Examiner |
|---|---|---|
| The Hague | 2 April 2024 | Jegou, Gwénaëlle |

Europäisches
Patentamt

European
Patent Office

Office européen
des brevets

## EUROPEAN SEARCH REPORT

Application Number

EP 23 21 5925

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ADRIÁN BADÍA ET AL: "High Biobased Content Latexes for Development of Sustainable Pressure Sensitive Adhesives", INDUSTRIAL & ENGINEERING CHEMISTRY RESEARCH, vol. 57, no. 43, 4 October 2018 (2018-10-04), pages 14509-14516, XP055716315, ISSN: 0888-5885, DOI: 10.1021/acs.iecr.8b03354 * abstract * | 20 | |

TECHNICAL FIELDS
SEARCHED      (IPC)

The present search report has been drawn up for all claims

| Place of search | Date of completion of the search | Examiner |
|---|---|---|
| The Hague | 2 April 2024 | Jegou, Gwénaëlle |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 .......................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 21 5925

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2024

| Patent document cited in search report | | | Publication date | Patent family member(s) | | | Publication date |
|---|---|---|---|---|---|---|---|
| EP  0429207 | A | | 29-05-1991 | AT | E134661 | T1 | 15-03-1996 |
| | | | | AU | 637423 | B2 | 27-05-1993 |
| | | | | BR | 9005685 | A | 17-09-1991 |
| | | | | CA | 2029076 | A1 | 14-05-1991 |
| | | | | CN | 1051739 | A | 29-05-1991 |
| | | | | DE | 69025550 | T2 | 01-08-1996 |
| | | | | DK | 0429207 | T3 | 18-03-1996 |
| | | | | EP | 0429207 | A1 | 29-05-1991 |
| | | | | ES | 2086377 | T3 | 01-07-1996 |
| | | | | JP | 3181906 | B2 | 03-07-2001 |
| | | | | JP | H03207475 | A | 10-09-1991 |
| | | | | KR | 910009849 | A | 28-06-1991 |
| | | | | MX | 164018 | B | 09-07-1992 |
| | | | | MY | 104592 | A | 30-04-1994 |
| | | | | NZ | 235950 | A | 23-12-1992 |
| | | | | PH | 26738 | A | 28-09-1992 |
| | | | | PT | 95860 | A | 13-09-1991 |
| | | | | US | 5035944 | A | 30-07-1991 |
| US  7931972 | B2 | | 26-04-2011 | AT | E459584 | T1 | 15-03-2010 |
| | | | | AU | 2007240340 | A1 | 01-11-2007 |
| | | | | CN | 101426749 | A | 06-05-2009 |
| | | | | EP | 2010467 | A2 | 07-01-2009 |
| | | | | US | 2007248837 | A1 | 25-10-2007 |
| | | | | WO | 2007124399 | A2 | 01-11-2007 |
| US  2012094115 | A1 | | 19-04-2012 | JP | 5344038 | B2 | 20-11-2013 |
| | | | | JP | WO2011004753 | A1 | 20-12-2012 |
| | | | | SG | 175362 | A1 | 28-11-2011 |
| | | | | US | 2012094115 | A1 | 19-04-2012 |
| | | | | WO | 2011004753 | A1 | 13-01-2011 |
| JP  2002285122 | A | | 03-10-2002 | NONE | | | |
| US  2019367644 | A1 | | 05-12-2019 | CN | 109563369 | A | 02-04-2019 |
| | | | | EP | 3478780 | A1 | 08-05-2019 |
| | | | | US | 2019367644 | A1 | 05-12-2019 |
| | | | | WO | 2018007325 | A1 | 11-01-2018 |
| EP  3013767 | A1 | | 04-05-2016 | BR | 112015031262 | A2 | 25-07-2017 |
| | | | | CN | 105324347 | A | 10-02-2016 |
| | | | | EP | 3013767 | A1 | 04-05-2016 |
| | | | | FR | 3007767 | A1 | 02-01-2015 |
| | | | | JP | 6329258 | B2 | 23-05-2018 |
| | | | | JP | 2016524020 | A | 12-08-2016 |
| | | | | KR | 20160025584 | A | 08-03-2016 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 23 21 5925

This annex lists the patent family members relating to the patent documents cited in  the above-mentioned European search report.
The members are as contained in the European Patent Office EDP file on
The European Patent Office is in no way liable for these particulars which are merely given for the purpose of information.

02-04-2024

| Patent document cited in search report | Publication date | Patent family member(s) | | Publication date |
|---|---|---|---|---|
| | | MY | 179975 A | 19-11-2020 |
| | | SG | 11201510604V A | 28-01-2016 |
| | | US | 2016152751 A1 | 02-06-2016 |
| | | WO | 2014207389 A1 | 31-12-2014 |
| | | ZA | 201508869 B | 29-11-2017 |
| WO 2022008661 A1 | 13-01-2022 | AU | 2021305399 A1 | 02-02-2023 |
| | | BR | 112023000145 A2 | 31-01-2023 |
| | | CA | 3185272 A1 | 13-01-2022 |
| | | CN | 115989295 A | 18-04-2023 |
| | | EP | 4178997 A1 | 17-05-2023 |
| | | JP | 2023532812 A | 31-07-2023 |
| | | US | 2023265229 A1 | 24-08-2023 |
| | | WO | 2022008661 A1 | 13-01-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9521884 A
- WO 9856867 A
- WO 9937716 A
- WO 2007141198 A
- WO 2022008661 A
- WO 2006092272 A
- DE 102006039203 A
- EP 2922580 A
- EP 2290045 A1
- EP 2290034 A1
- EP 0789724 A
- DE 4003422 A
- US 4269749 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- WO 2013117428 A

### Non-patent literature cited in the description

- **T. G. FOX.** *Bull. Am. Phys. Soc.,* 1956, (1), 123
- Ullmann's Encyclopädie der technischen Chemie. Ullmann's Encyclopedia of Industrial Chemistry. Verlag Chemie, 1980, vol. 19, 18
- **J. BRANDRUP ; E. H. IMMERGUT.** Polymer Handbook. J. Wiley, 1966
- Characterization of Aqueous Polymer Dispersions. **H. WIESE.** Polymer Dispersions and Their Industrial Applications. Wiley-VCH, 2002, 41-73
- *Polymer Science and Engineering,* 1987, vol. 8, 659
- **D.C. BLACKLEY.** *High Polymer Latices,* 1966, vol. 1, 35
- **H. WARSON.** *The Applications of Synthetic Resin Emulsions,* 1972, 246
- **D. DIEDERICH.** *Chemie in unserer Zeit,* 1990, vol. 24, 135-142
- Emulsion Polymerisation. Interscience Publishers, 1965
- **F. HÖLSCHER.** Hochpolymerer. Springer-Verlag, 1969
- Methoden der organischen Chemie [Methods of Organic Chemistry. **HOUBEN-WEYL.** Makromolekulare Stoffe [Macromolecular Substances. Georg-Thieme-Verlag, 1961, vol. XIV/1, 192-208
- *Adhesive Age,* July 1987, 19-23
- *Polym. Mater. Sci. Eng.,* 1989, vol. 61, 588-592